(19) **Europäisches Patentamt European Patent Office Office européen des brevets**

(11) **EP 4 693 980 A1**

(12) **EUROPEAN PATENT APPLICATION**
published in accordance with Art. 153(4) EPC

(43) Date of publication:
**11.02.2026 Bulletin 2026/07**

(21) Application number: **23931578.1**

(22) Date of filing: **07.04.2023**

(51) International Patent Classification (IPC):
**H04L 1/1812** (2023.01)

(52) Cooperative Patent Classification (CPC):
**H04L 1/1864; H04L 1/1812; H04L 1/1822;
H04L 1/1887; H04L 1/1896**

(86) International application number:
**PCT/CN2023/087128**

(87) International publication number:
**WO 2024/207518 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHODS FOR DETERMINING HYBRID AUTOMATIC REPEAT REQUEST PROCESS NUMBER, AND APPARATUSES**

(57) Disclosed in the embodiments of the present disclosure are methods for determining a hybrid automatic repeat request (HARQ) process number, and apparatuses, which can be applied to the technical field of communications. A method executed by a terminal device comprises: determining parameter information within a specific duration; and, according to the parameter information, determining an HARQ process ID corresponding to a PUSCH within the specific duration, the parameter information comprising at least one of an index of each TO, a group index of TOs, the number of the TOs, a first offset corresponding to each TO, a second offset related to an HARQ process ID corresponding to the first PUSCH and a reference HARQ process ID. Therefore, the terminal device can determine the HARQ process ID corresponding to the PUSCH within the specific duration according to the parameter information, and can determine different HARQ process IDs corresponding to different PUSCHs, thereby facilitating scheduling flexibility.

determining parameter information in a specific duration — S21

determining, according to the parameter information, an HARQ process ID corresponding to a PUSCH in the specific duration — S22

FIG. 2

## Description

### TECHNICAL FIELD

The present disclosure relates to the field of communication technologies, and in particular relates to a method and an apparatus for determining a hybrid automatic repeat request process identifier.

### BACKGROUND

In a wireless communication system, in order to improve the reliability of data transmission, a hybrid automatic repeat request (HARQ) technology is used.

In the related art, there is no clear method for indicating an HARQ process identifier (ID) corresponding to a physical uplink shared channel (PUSCH) within a period of time, which is a problem that needs to be solved urgently.

SUMMARY

The embodiments of the present disclosure provide a method and an apparatus for determining a hybrid automatic repeat request process identifier. A terminal may determine an HARQ process ID corresponding to a PUSCH in a specific duration according to parameter information, and may determine that different PUSCHs correspond to different HARQ process IDs, which is beneficial to the scheduling flexibility.

In a first aspect, embodiments of the present disclosure provide a method for determining a hybrid automatic repeat request process identifier, performed by a terminal and including: determining, by the terminal, parameter information in a specific duration; and determining, according to the parameter information, an HARQ process ID corresponding to a PUSCH in the specific duration, where the parameter information includes at least one of: an index of a transmission occasion (TO), a group index of a TO, the number of TOs, a first offset corresponding to a TO, a second offset related to an HARQ process ID corresponding to a first PUSCH, or a reference HARQ process ID.

In this technical solution, the terminal determines parameter information in a specific duration; and determines, according to the parameter information, an HARQ process ID corresponding to a PUSCH in the specific duration, where the parameter information includes at least one of: an index of a TO, a group index of a TO, the number of TOs, a first offset corresponding to a TO, a second offset related to an HARQ process ID corresponding to a first PUSCH, or a reference HARQ process ID. Therefore, the terminal may determine the HARQ process ID corresponding to the PUSCH in the specific duration according to the parameter information, and may determine that different PUSCHs correspond to different HARQ process IDs, which is beneficial to the scheduling flexibility.

In a second aspect, embodiments of the present disclosure provide a method for determining a hybrid automatic repeat request process identifier, performed by a network side device and including: sending configuration information to a terminal, where the configuration information is used by the terminal to determine parameter information in a specific duration, and the parameter information includes at least one of: an index of a TO, a group index of a TO, the number of TOs, a first offset corresponding to a TO, a second offset related to an HARQ process ID corresponding to a first PUSCH, or a reference HARQ process ID.

In a third aspect, embodiments of the present disclosure provide a communication device, having the function of implementing some or all of the functions of the terminal in the method described above in the first aspect. For example, the functions of the communication device may have the functions in some or all of the embodiments of the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the communication device may include a transceiver module and a processing module, and the processing module is configured to support the communication device to perform corresponding functions in the above method. The transceiver module is configured to support the communication between the communication device and other devices. The communication device may further include a storage module, which is coupled to the transceiver module and the processing module and stores desired computer programs and data for the communication device.

In an implementation, the communication device includes a processing module configured to determine parameter information in a specific duration. The processing module is further configured to determine, according to the parameter information, an HARQ process ID corresponding to a PUSCH in the specific duration, where the parameter information includes at least one of: an index of a TO, a group index of a TO, the number of TOs, a first offset corresponding to a TO, a second offset related to an HARQ process ID corresponding to a first PUSCH, or a reference HARQ process ID.

In a fourth aspect, embodiments of the present disclosure provide another communication device, having the function of implementing some or all of the functions of the network side device in the method described above in the second aspect. For example, the functions of the communication device may have the functions in some or all of the embodiments of the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the communication device may include a transceiver module and a processing module, and the processing module is configured to support the communication device to perform corresponding functions in the above method. The transceiver module is configured to support the communication between the communication device and other devices. The communication device may further include a storage module, which is coupled to the transceiver module and the processing module and stores desired computer programs and data for the communication device.

In an implementation, the communication device includes the transceiver module configured to determine parameter information in a specific duration. The processing module is further configured to send configuration information to a terminal, where the configuration information is used by the terminal to determine parameter information in a specific duration, and the parameter information includes at least one of: an index of a TO, a group index of a TO, the number of TOs, a first offset corresponding to a TO, a second offset related to an HARQ process ID corresponding to a first PUSCH, or a reference HARQ process ID.

In a fifth aspect, embodiments of the present disclosure provide a communication device, which includes a processor. When the processor calls a computer program in a memory, the method described above in the first aspect is performed.

In a sixth aspect, embodiments of the present disclosure provide a communication device, which includes a processor. When the processor calls a computer program in a memory, the method described above in the second aspect is performed.

In a seventh aspect, embodiments of the present disclosure provide a communication device, which includes a processor and a memory having stored therein a computer program. The processor executes the computer program stored in the memory to cause the communication device to perform the method described above in the first aspect.

In an eighth aspect, embodiments of the present disclosure provide a communication device, which includes a processor and a memory having stored therein a computer program. The processor executes the computer program stored in the memory to cause the communication device to perform the method described above in the second aspect.

In a ninth aspect, embodiments of the present disclosure provide a communication device, which includes a processor and an interface circuit configured to receive code instructions and transmit the code instructions to the processor. The processor is configured to run the code instructions to cause the communication device to perform the method described above in the first aspect.

In a tenth aspect, embodiments of the present disclosure provide a communication device, which includes a processor and an interface circuit configured to receive code instructions and transmit the code instructions to the processor. The processor is configured to run the code instructions to cause the communication device to perform the method described above in the second aspect.

In an eleventh aspect, embodiments of the present disclosure provide a system for determining a hybrid automatic repeat request process identifier, which includes the communication device described in the third and fourth aspects, or the communication device described in the fifth and sixth aspects, or the communication device described in the seventh and eighth aspects, or the communication device described in the ninth and tenth aspects.

In a twelfth aspect, embodiments of the present disclosure provide a computer-readable storage medium for storing instructions used by the above-mentioned terminal that, when executed, cause the terminal to perform the method described above in the first aspect.

In a thirteenth aspect, embodiments of the present disclosure provide a computer-readable storage medium for storing instructions used by the above-mentioned network side device that, when executed, cause the network side device to perform the method described above in the second aspect.

In a fourteenth aspect, the present disclosure further provides a computer program product including a computer program that, when run on a computer, causes the computer to perform the method described above in the first aspect.

In a fifteenth aspect, the present disclosure further provides a computer program product including a computer program that, when run on a computer, causes the computer to perform the method described above in the second aspect.

In a sixteenth aspect, the present disclosure provides a chip system, including at least one processor and an interface for supporting a terminal to implement the functions involved in the first aspect, for example, determining or processing at least one of data or information involved in the above method. In a possible design, the chip system further includes a memory, which is configured to store desired computer programs and data for the terminal. The chip system may be composed of chips, or may include chips and other discrete devices.

In a seventeenth aspect, the present disclosure provides a chip system, including at least one processor and an interface for supporting a network side device to implement the functions involved in the second aspect, for example, determining or processing at least one of data or information involved in the above method. In a possible design, the chip system further includes a memory, which is configured to store desired computer programs and data for the network side device. The chip system may be composed of chips, or may include chips and other discrete devices.

In an eighteenth aspect, the present disclosure provides a computer program that, when run on a computer, causes the computer to perform the method described above in the first aspect.

In a nineteenth aspect, the present disclosure provides a computer program that, when run on a computer, causes the computer to perform the method described above in the second aspect.

## BRIEF DESCRIPTION OF THE DRAWINGS

In order to more clearly illustrate the technical solutions in the embodiments of the present disclosure or the background, the drawings required for use in the embodiments of the present disclosure or the background will be described below.

FIG. 1 is a schematic diagram of the architecture of a communication system provided in an embodiment of the present disclosure.

FIG. 2 is a flowchart of a method for determining a hybrid automatic repeat request process identifier provided in an embodiment of the present disclosure.

FIG. 3 is a schematic diagram of an index of a TO within a CG period provided in an embodiment of the present disclosure.

FIG. 4 is a flowchart of another method for determining a hybrid automatic repeat request process identifier provided in an embodiment of the present disclosure.

FIG. 5 is a flowchart of yet another method for determining a hybrid automatic repeat request process identifier provided in an embodiment of the present disclosure.

FIG. 6 is a schematic diagram of another index of a TO within a CG period provided in an embodiment of the present disclosure.

FIG. 7 is a schematic diagram of yet another index of a TO within a CG period provided in an embodiment of the present disclosure.

FIG. 8 is a flowchart of yet another method for determining a hybrid automatic repeat request process identifier provided in an embodiment of the present disclosure.

FIG. 9 is a flowchart of yet another method for determining a hybrid automatic repeat request process identifier provided in an embodiment of the present disclosure.

FIG. 10 is a flowchart of yet another method for determining a hybrid automatic repeat request process identifier provided in an embodiment of the present disclosure.

FIG. 11 is a flowchart of yet another method for determining a hybrid automatic repeat request process identifier provided in an embodiment of the present disclosure.

FIG. 12 is a schematic diagram of an HARQ process ID corresponding to a PUSCH in a CG period provided in an embodiment of the present disclosure.

FIG. 13 is a schematic diagram of another HARQ process ID corresponding to a PUSCH in a CG period provided in an embodiment of the present disclosure.

FIG. 14 is a flowchart of yet another method for determining a hybrid automatic repeat request process identifier provided in an embodiment of the present disclosure.

FIG. 15 is a flowchart of yet another method for determining a hybrid automatic repeat request process identifier provided in an embodiment of the present disclosure.

FIG. 16 is a block diagram of a communication device provided in an embodiment of the present disclosure.

FIG. 17 is a block diagram of another communication device provided in an embodiment of the present disclosure.

FIG. 18 is a schematic block diagram of a chip provided in an embodiment of the present disclosure.

## DETAILED DESCRIPTION

In order to better understand the method and the apparatus for determining a hybrid automatic repeat request process identifier disclosed in the embodiments of the present disclosure, the communication system to which the embodiments of the present disclosure are applicable is first described below.

Reference will now be made in detail to illustrative embodiments, examples of which are illustrated in the accompanying drawings. The same or similar elements or the elements having the same or similar functions are denoted by the same or similar reference numerals throughout the descriptions. The embodiments described herein with reference to the drawings are illustrative, and used to explain the present disclosure. The embodiments shall not be construed to limit the present disclosure. In the description of the present disclosure, unless otherwise specified, a character "/" means "or", for example, A/B, which may mean A or B. "And/or" in the present disclosure, which describes an association relationship of associated objects, means that there may be three relationships, for example, A and/or B, which may mean that A exists alone, A and B exist at the same time, and B exists alone.

To facilitate the understanding of the technical solutions of the present disclosure, some terms involved in the embodiments of the present disclosure are briefly introduced below.

1. Uplink grant-free transmission

The uplink transmission of a terminal does not need to be completed by dynamic scheduling of a network side device. Specifically, when uplink data arrives (data arrival in the embodiments of the present disclosure means that the data has been processed and may be sent), the terminal does not need to send a scheduling request (SR) to the network side device and wait for the dynamic grant of the network side device, but may directly use transmission resources and specified transmission parameters pre-allocated by the network side device to send uplink data to the network side device.

The uplink grant-free transmission may also be called an uplink scheduling-free transmission, an uplink (UL) data transmission without dynamic grant, an uplink dynamic scheduling-free transmission, a configured grant (CG) transmission, a high-layer configured transmission, etc.

The uplink grant-free transmission is divided into two categories: a physical uplink shared channel (PUSCH) transmission based on a first type of configured grant (type 1 PUSCH transmission with a configured grant, or a PUSCH transmission with type 1 configured grant, or type 1 configured grant PUSCH transmission), and a PUSCH transmission based on a second type of configured grant (type 2 PUSCH transmission with a configured grant, or PUSCH transmission with type 2 configured grant, or type 2 configured grant PUSCH transmission).

The configuration manner of the PUSCH transmission based on the first type of configured grant is that the network side device configures all transmission resources and transmission parameters for the terminal via high-layer parameters (such as ConfiguredGrantConfig), for example, all transmission resources and transmission parameters including the period of time domain resources, open-loop power control related parameters, waveforms, redundancy version (RV) sequences, the number of repetitions or retransmissions, a frequency hopping mode, a resource allocation type, the number of hybrid automatic repeat request (HARQ) processes, demodulation reference signal (DMRS) related parameters, a modulation and coding scheme (MCS) table, a resource block group (RBG) size, as well as time domain resources, frequency domain resources, MCS, and the like. After receiving the high-layer parameters, the terminal may immediately use the configured transmission parameters to perform a PUSCH transmission on the configured time-frequency resources.

The existing configuration manner of the PUSCH transmission based on the second type of configured grant is divided into the following two steps. First, the network side device configures some transmission resources and transmission parameters for the terminal via high-layer parameters (such as ConfiguredGrantConfig), for example, the period of time domain resources, open-loop power control related parameters, waveforms, RV sequences, the number of repetitions, a frequency hopping mode, a resource allocation type, the number of HARQ processes, DMRS related parameters, an MCS table, and an RBG size. Afterwards, the network side device sends downlink control information (DCI) (such as configuration-specific DCI) to the terminal, so that the terminal activates the PUSCH transmission based on the second type of configured grant, and simultaneously configures transmission resources and transmission parameters including time domain resources, frequency domain resources, DMRS related parameters, MCS, and the like. It should be noted that the PUSCH transmission of the second type of configured grant may only be used after being activated.

The uplink grant-free transmission and the uplink configured grant transmission (PUSCH transmission with a configured grant) were introduced in Release 15 (Rel-15). Rel-15 supports two types of uplink grant-free transmission. All parameters of the first type of grant-free transmission are configured by the network side device (such as a base station) via a high-layer signaling (RRC signaling); some parameters of the second type of grant-free transmission are configured by the network side device (such as a base station) via a high-layer signaling, and other scheduling-related parameters are configured by the network side device (such as a base station) by activating DCI. Release 16 (Rel-16) supports the configuration and activation of up to 12 uplink grant-free transmission configurations on a bandwidth part (BWP), each of which is identified by an index.

In related technologies, the period of uplink grant-free transmission (CG period) is configured by a high-layer signaling and supports up to $14\times40960$ symbols. During the CG period, the first type of grant-free transmission configures time-frequency resources via a high-layer signaling, and the second type of grant-free transmission configures time-frequency resources by activating DCI. These time-frequency resources within the CG period may also be called CG PUSCH transmission occasions (TOs). Only one TO may be configured in one CG period in Rel-15/16. At the same time, the base station may further configure the number $K$ of repetitions via a high-layer signaling. At this time, there may be $K$ CG PUSCH TOs with the same configuration in the CG period.

2. TO

The TO includes the time domain resources for transmitting data once. A TO includes one or more symbols. When there are multiple TOs, and the multiple TOs are used for a retransmission, multiple identical data are repeatedly sent on the multiple TOs. At this time, one data transmission at one TO may be called one retransmission. The multiple identical data refer to multiple identical or different RVs obtained after the same information bit is channel-coded.

3. Extended reality (XR) requirement

XR (augmented reality, AR; virtual reality, VR) services require low latency and high throughput. To enhance XR services, the radio access network (RAN) 1#111 meeting decided to enhance CG in RAN1, that is, to reuse a CG PUSCH TO that is not used by the terminal. For this purpose, the terminal needs to send a dynamic indication signaling to the network side device, and the signaling notifies the network side device of the "unused" TO of the terminal.

The premise for achieving the above XR requirements is to allow multiple TOs to be configured within a CG period, that is, to configure multiple TOs within a period in a non-repetition manner.

4. Configured grant-uplink control information (CG-UCI)

The CG-UCI is carried on a CG PUSCH and is used to carry some transmission information of the CG PUSCH. The transmission information carried by the CG-UCI includes one or more of HARQ process ID information of the CG-PUSCH, RV information of the CG-PUSCH, new data indication information of the CG-PUSCH, and channel occupancy time (COT) sharing information of the CG-PUSCH. In the new radio unlicense (NRU) access technology on a grant-free spectrum, the network side device cannot determine when the terminal may grab a channel, so the CG-UCI is needed to carry the transmission information of the CG-PUSCH.

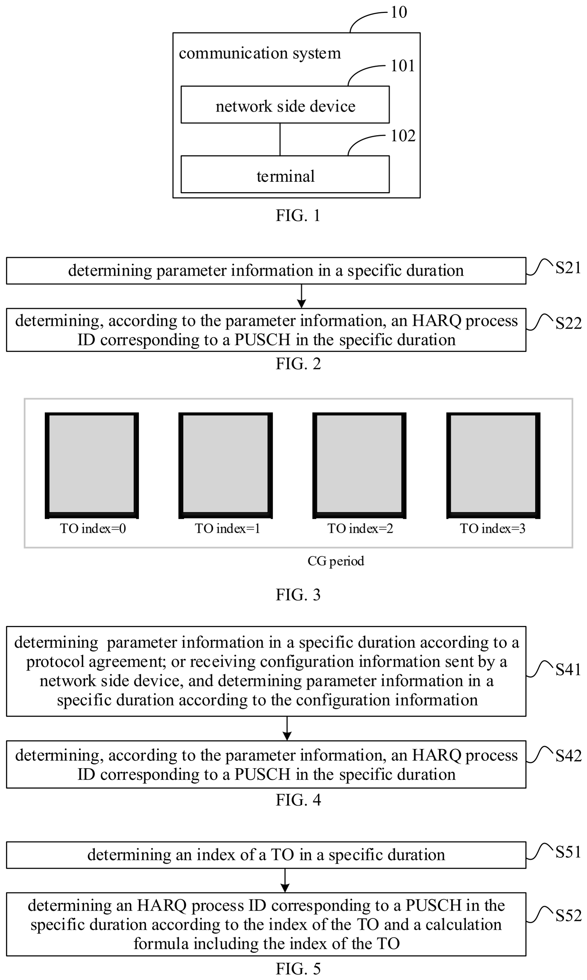

Reference is made to FIG. 1, which is a schematic diagram of the architecture of a communication system provided in an embodiment of the present disclosure. The communication system may include, but is not limited to, at least one network side device and at least one terminal. Moreover, the number and form of devices shown in FIG. 1 are used as examples only, but do not constitute a limitation on the embodiments of the present disclosure. In practical applications, two or more network side devices or two or more terminals may be included. Optionally, the communication system shown in FIG. 1 includes one network side device 101 and one terminal 102 as an example.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems.

The network side device 101 in the embodiments of the present disclosure may be an entity on the network side for transmitting or receiving signals. For example, the network side device 101 may be an access network device, including an evolved NodeB (eNB), a transmission reception point (TRP), a next generation NodeB (gNB) in an NR system, a base station in other future mobile communication systems, an access node in a wireless fidelity (Wi-Fi) system, or the like. The specific technology and specific device form adopted by the network side device 101 are not limited in the embodiments of the present disclosure. The network side device 101 provided in the embodiments of the present disclosure may be composed of a centralized unit (CU) and a distributed unit (DU), in which the CU may also be referred to as a control unit. The CU-DU structure may be used to split the protocol layer of the network side device 101, such as the base station, and the functions of some protocol layers are placed in the CU for centralized control, and the functions of some or all of the remaining protocol layers are distributed in the DU, and the DU is centrally controlled by the CU.

The terminal 102 in the embodiments of the present disclosure may be an entity on the user side for receiving or transmitting signals, such as a mobile phone. The terminal may also be called a user equipment (UE), a terminal device, a mobile station (MS), a mobile terminal (MT), or the like. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

In addition, in order to facilitate the understanding of the embodiments of the present disclosure, the following points are explained.

First, in the embodiments of the present disclosure, "indicating" may include "directly indicating" and "indirectly indicating". When it is described that certain information indicates A, it may include that the information carries A, or it may also include that the information directly indicates A or indirectly indicates A, but it does not mean that the information must carry A.

The information indicated by the information is called information to be indicated. In the specific implementation process, there are many ways to indicate the information to be indicated, for example, but not limited to, directly indicating the information to be indicated, such as the information to be indicated itself or the index of the information to be indicated. The information to be indicated may also be indirectly indicated by indicating other information, where there is an association relationship between the other information and the information to be indicated. It is also possible to indicate only a portion of the information to be indicated, while the other portion of the information to be indicated is known or agreed in advance. For example, the indication of specific information may be achieved by using a pre-agreed (e.g., protocol-specified) arrangement order of various information, thereby reducing the indication overhead to a certain extent.

The information to be indicated may be sent as a whole, or divided into multiple sub-information and sent separately, and the sending periods and/or sending times of these sub-information may be the same or different. The specific sending method is not limited in the present disclosure. The sending periods and/or sending times of these sub-information may be predefined, for example, predefined according to a protocol.

Second, in the present disclosure, "first", "second" and various numerical numbers (for example, "#1", and "#2") are only used for the convenience of description, but are not used to limit the scope of the embodiments of the present disclosure, for example, distinguishing different information, etc.

Third, multiple implementations are listed in the embodiments of the present disclosure to clearly illustrate the technical solutions in the embodiments of the present disclosure. Certainly, those skilled in the art may understand that the multiple implementations provided in the embodiments of the present disclosure may be executed individually, or may be executed together with the methods in other implementations in the embodiments of the present disclosure, or may be executed individually or in combination with some methods in other related technologies, which are not limited in the embodiments of the present disclosure.

In the related art, there is no clear method for indicating an HARQ process ID corresponding to a PUSCH within a period of time, which is a problem that needs to be solved urgently.

Based on this, a method for determining an HARQ process ID is provided in an embodiment of the present disclosure, where a terminal determines parameter information in a specific duration; and determines, according to the parameter information, an HARQ process ID corresponding to a PUSCH in the specific duration, and the parameter information includes at least one of: an index of a TO, a group index of a TO, the number of TOs, a first offset corresponding to a TO, a second offset related to an HARQ process ID corresponding to a first PUSCH, or a reference HARQ process ID. Therefore, the terminal may determine the HARQ process ID corresponding to the PUSCH in the specific duration according to the parameter information, and may determine that different PUSCHs correspond to different HARQ process IDs, which is beneficial to the scheduling flexibility.

A method and an apparatus for determining a hybrid automatic repeat request process identifier provided in the present disclosure will be described in detail below with reference to the accompanying drawings.

Reference is made to FIG. 2, which is a flowchart of a method for determining a hybrid automatic repeat request process identifier provided in an embodiment of the present disclosure. As shown in FIG. 2, the method is performed by a terminal, and may include, but is not limited to, the following steps.

At step S21, parameter information in a specific duration is determined.

In some embodiments, the specific duration is at least one of: one CG period; multiple CG periods; multiple consecutive TOs; or a valid time window, where the valid time window is a time range indicated by dynamic indication information from the terminal.

In an embodiment of the present disclosure, the specific duration may be one CG period.

In an embodiment of the present disclosure, the specific duration may be multiple CG periods.

In an embodiment of the present disclosure, the specific duration may be multiple consecutive TOs.

In an embodiment of the present disclosure, the specific duration may be a valid time window, where the valid time window is a time range indicated by dynamic indication information from the terminal.

It may be understood that the terminal performs an uplink transmission in a valid TO and notifies the network side device of the usage of the TO via the dynamic indication information, and the notification may be based on uplink control information (UCI). There are two usage statuses which the terminal notifies: one is an "unused" status and the other is a "used" status. The terminal will not use the TO in the "unused" status, or the terminal will not use the TO in the "unused" status before the dynamic indication information is updated. The terminal may not use the TO in the "used" status.

The UCI may be new UCI or CG-UCI, carried by the CG PUSCH, and sent in any one or several TOs. The above-mentioned term "using the TO" means that the terminal performs a transmission on a PUSCH in the TO, and the term "not using the TO" means that the terminal does not perform a transmission on a PUSCH in the TO.

In an embodiment of the present disclosure, the time range indicated by the dynamic indication information from the terminal may be a time range constituted by the TOs used by the terminal reported by the terminal.

It should be noted that the above embodiments are not exhaustive, and are only illustrations of some embodiments. The above embodiments may be implemented individually or in combination. The above embodiments are only for illustration, but are not intended to be specific limitations on the scope of protection of the embodiments of the present disclosure.

At step S22, an HARQ process ID corresponding to a PUSCH in the specific duration is determined according to the parameter information.

In an embodiment of the present disclosure, the terminal may determine parameter information in a specific duration. After determining the parameter information, the terminal may determine the HARQ process ID (also known as HP ID) corresponding to the PUSCH in the specific duration according to the parameter information.

The terminal may determine the HARQ process IDs corresponding to one or more PUSCHs in the specific duration according to the parameter information.

In an embodiment of the present disclosure, the terminal may determine parameter information in the specific duration when the terminal needs to determine the HARQ process IDs corresponding to one or more PUSCHs in the specific duration.

For example, in the case of an uplink grant-free transmission, the terminal may need to determine the HARQ process IDs corresponding to one or more PUSCHs in the specific duration to determine the parameter information in the specific duration.

It should be noted that the conditions under which the terminal needs to determine the HARQ process IDs corresponding to one or more PUSCHs in the specific duration may be found in the relevant conditions in the relevant technologies, and will not be repeated here.

Certainly, the terminal may further determine parameters in the specific duration when other conditions are met, which is not specifically limited in the embodiments of the present disclosure.

In some embodiments, the terminal determines parameter information in the specific duration, and may determine the HARQ process ID corresponding to the PUSCH carrying a transmission block (TB) in the specific duration according to the parameter information.

In some embodiments, the PUSCH is a first CG PUSCH determined by the terminal according to a transmission configuration sent by the network side device, or the PUSCH is a second CG PUSCH determined and sent by the terminal according to a transmission configuration sent by the network side device.

In an embodiment of the present disclosure, the PUSCH may be the first CG PUSCH determined by the terminal according to the transmission configuration sent by the network side device. In this case, the terminal needs to determine the corresponding HARQ process ID for each TO in the specific duration configured by the network side device, so as to determine the HARQ process ID corresponding to the PUSCH transmitted in each TO.

In an embodiment of the present disclosure, the PUSCH may be the second CG PUSCH determined and sent by the terminal according to the transmission configuration sent by the network side device. In this case, the terminal may only determine the HARQ process ID corresponding to the TO in which the PUSCH is transmitted, so as to determine the HARQ process ID corresponding to the PUSCH transmitted in the TO in which the PUSCH is transmitted.

The parameter information includes at least one of: an index of a TO, a group index of a TO, the number of TOs, a first offset corresponding to a TO, a second offset related to an HARQ process ID corresponding to a first PUSCH, or a reference HARQ process ID.

It should be understood that the specific duration may include one or more TOs, and the configurations of multiple TOs may be the same or different.

For example, the configurations of the multiple TOs are the same, the time slot lengths between any two TOs of the multiple TOs are the same, and the number and position of the symbols of the TOs in a time slot are the same.

For example, the configurations of multiple TOs are different, the time slot lengths between any two TOs of the multiple TOs are partially different or completely different, and/or the number of symbols occupied by TOs in the time slot is partially different or completely different, and/or the position of symbols occupied by TOs in the time slot is partially different or completely different, and so on.

In an embodiment of the present disclosure, the parameter information in the specific duration may include an index of a TO.

The specific duration may include one or more TOs. When there are multiple TOs, different TOs have different indexes.

For example, as shown in FIG. 3, when the specific duration is one CG period, the CG period includes 4 TOs. In chronological order, the index of the first TO may be 0, the index of the second TO may be 1, and so on.

In an embodiment of the present disclosure, the parameter information in the specific duration may include a group index of a TO.

The specific duration may include one or more TO groups, different TO groups have different group indexes, each TO group may include one or more TOs, and one or more TOs in the same TO group correspond to the same group index.

For example, the specific duration includes two TO groups, the first TO group includes TO#1 and TO#2, and the second TO group includes TO#3, where the group indexes of TO#1 and TO#2 may be 0, and the group index of TO#3 may be 1.

In an embodiment of the present disclosure, the parameter information in the specific duration may include the number of TOs in the specific duration.

In an embodiment of the present disclosure, the parameter information in the specific duration may include a first offset corresponding to a TO. The first offset corresponding to the TO may be related to the index of the TO.

For example, the first offset corresponding to the TO may be the index of the TO, or the first offset corresponding to the TO may be the index of the TO + 1, or the first offset corresponding to the TO may be set according to the granularity of the TO, or the like.

In an embodiment of the present disclosure, the parameter information in the specific duration may include a second offset related to the HARQ process ID corresponding to the first PUSCH. The second offset related to the HARQ process ID corresponding to the first PUSCH may be used by the terminal to determine the HARQ process ID corresponding to the first PUSCH. If the specific duration includes multiple TOs for transmitting multiple PUSCHs, the terminal may determine the HARQ process ID corresponding to the PUSCH after the first PUSCH according to a specific rule.

In an embodiment of the present disclosure, the parameter information in the specific duration may include a reference HARQ process ID. The reference HARQ process ID may be the largest HARQ process ID, the smallest HARQ process ID, an HARQ process ID corresponding to a PUSCH transmitted in a certain TO, or the like.

It should be noted that the above embodiments are not exhaustive, and are only illustrations of some embodiments. The above embodiments may be implemented individually or in combination. The above embodiments are only for illustration, but are not intended to be specific limitations on the scope of protection of the embodiments of the present disclosure.

It may be understood that determining, by the terminal, the parameter information in the specific duration may be determining the parameter information in the specific duration based on the implementation of the terminal, or determining the parameter information in the specific duration based on the configuration of the network side device, or determining the parameter information in the specific duration based on the protocol agreement, or the like, which is not specifically limited in the embodiments of the present disclosure.

In some embodiments, determining, by the terminal, the parameter information in the specific duration includes: determining the parameter information in the specific duration according to a protocol agreement; or receiving configuration information sent by the network side device, and determining the parameter information in the specific duration according to the configuration information.

In an embodiment of the present disclosure, determining, by the terminal, the parameter information in the specific duration may be determining the parameter information in the specific duration according to a protocol agreement.

In some embodiments, the index of the TO is specified by a protocol; or it is specified by a protocol that an index of a $k^{th}$ TO in the specific duration is a + (k-1) × b, where a and b are both integers, $1 \leq k \leq K$, k is an integer, and K is the number of TOs in the specific duration.

In an embodiment of the present disclosure, the index of the TO is specified by a protocol, so that the terminal may determine the index of the TO in the specific duration according to the protocol agreement.

For example, the specific duration includes 2 TOs, and the indexes of the TOs are specified by a protocol, where the index of the first TO#1 is 1, and the index of the second TO#2 is 2. Therefore, the terminal may determine the indexes of the TOs in the specific duration according to the protocol agreement.

In an embodiment of the present disclosure, it is specified by a protocol that an index of a $k^{th}$ TO in the specific duration is $a + (k-1) \times b$, where a and b are both integers, $1 \leq k \leq K$, k is an integer, and K is the number of TOs in the specific duration. Therefore, the terminal may determine the index of the TO in the specific duration according to the protocol agreement.

For example, the specific duration includes 2 TOs, K is 2, and when a is 1 and b is 1, it is specified by a protocol that the index of the first TO#1 in the specific duration is 1 + (1-1) × 1 = 1, and the index of the second TO#2 is 1 + (2-1) × 1 = 2. Therefore, the terminal may determine the index of the TO in the specific duration according to the protocol agreement.

It should be noted that the above examples are for illustration only, but are not intended to be specific limitations on the embodiments of the present disclosure. The number of TOs in the specific duration may also be 3 or more, and the values of a and b may also be any other values.

In an embodiment of the present disclosure, determining, by the terminal, the parameter information in the specific duration may be receiving configuration information sent by the network side device, and determining the parameter information in the specific duration according to the configuration information.

Receiving, by the terminal, the configuration information sent by the network side device may be receiving a DCI signaling sent by the network side device, where the DCI signaling includes the configuration information; or may be receiving a radio resource control (RRC) signaling sent by the network side device, where the RRC signaling includes the configuration information.

In some embodiments, the configuration information includes first configuration information, where the first configuration information indicates the index of the TO in the specific duration; or second configuration information, where the second configuration information indicates the index of the first TO in the specific duration.

In an embodiment of the present disclosure, the terminal receives configuration information sent by the network side device, and the configuration information may include first configuration information, where the first configuration information indicates the index of the TO in the specific duration. Thus, the terminal may determine the index of the TO in the specific duration according to the first configuration information.

For example, the specific duration includes 2 TOs, and the first configuration information indicates the index of the TO in the specific duration, where the index of the first TO#1 is 1 and the index of the second TO#2 is 2. Therefore, the terminal may determine the index of the TO in the specific duration according to the first configuration information.

In an embodiment of the present disclosure, the terminal receives configuration information sent by the network side device, and the configuration information may include second configuration information, where the second configuration information indicates the index of the first TO in the specific duration. Thus, the terminal may determine the index of the first TO in the specific duration according to the second configuration information, and the terminal may determine the index of the TO that follows the first TO in chronological order in an implicit manner.

For example, the specific duration includes 4 TOs. The terminal receives the second configuration information sent by the network side device and determines that the second configuration information indicates that the index of the first TO in the specific duration is 0, where the first TO may be the first TO#1 in the specific duration. Thus, the terminal may determine that in the specific duration, the index of the second TO#2 is 1, the index of the third TO#3 is 2, and the index of the fourth TO#4 is 3 according to the time sequence of TOs.

Alternatively, the first TO may be the second TO#1 in the specific duration. Thus, the terminal may determine that in the specific duration, the index of the third TO#3 is 1 and the index of the fourth TO#4 is 2 according to the time sequence of TOs.

It should be noted that the above examples are for illustration only, but are not intended to be specific limitations on the embodiments of the present disclosure. The number of TOs in the specific duration may also be 2/3/5 or more than 5, and the index of the first TO in the specific duration may also be any other value.

In an embodiment of the present disclosure, when determining parameter information in the specific duration, the terminal may determine the HARQ process ID (also known as HP ID) corresponding to the PUSCH in the specific duration according to the parameter information.

In some embodiments, determining, according to the parameter information, the HARQ process ID corresponding to the PUSCH in the specific duration includes calculating the HARQ process ID corresponding to the PUSCH in the specific duration according to a calculation formula including the parameter information.

In an embodiment of the present disclosure, the terminal may calculate the HARQ process ID corresponding to the PUSCH in the specific duration according to the calculation formula including the parameter information.

It may be understood that the parameter information includes at least one of: an index of a TO, a group index of a TO, the number of TOs, a first offset corresponding to a TO, a second offset related to an HARQ process ID corresponding to a first PUSCH, or a reference HARQ process ID. The terminal may calculate the HARQ process ID corresponding to the PUSCH in the specific duration according to at least one of: an index of a TO, a group index of a TO, the number of TOs, a first offset corresponding to a TO, a second offset related to an HARQ process ID corresponding to a first PUSCH, or a reference HARQ process ID, and/or a calculation formula including at least one of: an index of a TO, a group index of a TO, the number of TOs, a first offset corresponding to a TO, a second offset related to an HARQ process ID corresponding to a first PUSCH, or a reference HARQ process ID.

In an embodiment of the present disclosure, the parameter information includes an index of a TO, and the terminal may calculate the HARQ process ID corresponding to the PUSCH in the specific duration according to the index of the TO and/or a calculation formula including the index of the TO.

In an embodiment of the present disclosure, the parameter information includes a group index of a TO, and the terminal may calculate the HARQ process ID corresponding to the PUSCH in the specific duration according to the group index of the TO and/or a calculation formula including the group index of the TO.

In an embodiment of the present disclosure, the parameter information includes the number of TOs, and the terminal may calculate the HARQ process ID corresponding to the PUSCH in the specific duration according to the number of TOs and/or a calculation formula including the number of TOs.

In an embodiment of the present disclosure, the parameter information includes a first offset corresponding to a TO, and the terminal may calculate the HARQ process ID corresponding to the PUSCH in the specific duration according to the first offset corresponding to the TO and/or a calculation formula including the first offset corresponding to the TO.

In an embodiment of the present disclosure, the parameter information includes a second offset related to an HARQ process ID corresponding to a first PUSCH. The terminal may calculate the HARQ process ID corresponding to the PUSCH in the specific duration according to the second offset related to the HARQ process ID corresponding to the first PUSCH and/or a calculation formula including the second offset related to the HARQ process ID corresponding to the first PUSCH.

In an embodiment of the present disclosure, the parameter information includes a reference HARQ process ID, and the terminal may calculate the HARQ process ID corresponding to the PUSCH in the specific duration according to the reference HARQ process ID and/or a calculation formula including the reference HARQ process ID.

It should be noted that the above embodiments are not exhaustive, and are only illustrations of some embodiments. The above embodiments may be implemented individually or in combination. The above embodiments are only for illustration, but are not intended to be specific limitations on the scope of protection of the embodiments of the present disclosure.

In some embodiments, calculating, by the terminal, the HARQ process ID corresponding to the PUSCH in the specific duration according to the parameter information and the calculation formula including the parameter information includes: determining the HARQ process ID corresponding to the first PUSCH according to the second offset related to the HARQ process ID corresponding to the first PUSCH and a calculation formula with the second offset related to the HARQ process ID corresponding to the first PUSCH; and determining that the HARQ process ID corresponding to an $s$th PUSCH in the specific duration is the HARQ process ID corresponding to the first PUSCH + $(s-1) \times$ a specific value, where $1 \leq s \leq S$, $s$ is an integer, S is the number of TOs in the specific duration, and the specific value is an integer.

In an embodiment of the present disclosure, the terminal may determine the HARQ process ID corresponding to the first PUSCH according to the second offset related to the HARQ process ID corresponding to the first PUSCH and a calculation formula with the second offset related to the HARQ process ID corresponding to the first PUSCH; and further determine that the HARQ process ID corresponding to an $s$th PUSCH in the specific duration is the HARQ process ID corresponding to the first PUSCH + $(s-1) \times$ a specific value, where $1 \leq s \leq S$, $s$ is an integer, S is the number of TOs in the specific duration, and the specific value is an integer.

For example, the number S of TOs in the specific duration is 4, and the specific value is 1. The terminal may determine the HARQ process ID corresponding to the first PUSCH according to the second offset related to the HARQ process ID corresponding to the first PUSCH and a calculation formula with the second offset related to the HARQ process ID corresponding to the first PUSCH. If the HARQ process ID corresponding to the first PUSCH is 1, the terminal may further determine that the HARQ process ID corresponding to the second PUSCH in the specific duration is the HARQ process ID corresponding to the first PUSCH $1 + (2-1) \times 1 = 2$, the HARQ process ID corresponding to the third PUSCH is the HARQ process ID corresponding to the first PUSCH $1 + (3-1) \times 1 = 3$, and the HARQ process ID corresponding to the fourth PUSCH is the HARQ process ID corresponding to the first PUSCH $1 + (4-1) \times 1 = 4$.

It should be noted that the above examples are for illustration only, but are not intended to be specific limitations on the embodiments of the present disclosure. The number of TOs in the specific duration may also be 2/3/5 or more than 5. According to the second offset related to the HARQ process ID corresponding to the first PUSCH and the calculation formula with the second offset related to the HARQ process ID corresponding to the first PUSCH, the value of the HARQ process ID corresponding to the first PUSCH may also be any other value.

In some embodiments, calculating, by the terminal, the HARQ process ID corresponding to the PUSCH in the specific duration according to the parameter information includes: if the reference HARQ process ID is $M$, then determining, according to the reference HARQ process ID, that the HARQ process ID corresponding to an $n$th PUSCH in the specific duration is $M - (n - 1)$, where $1 \leq n \leq N$, N is the number of TOs in the specific duration, the reference HARQ process ID is a maximum HARQ process ID applied to the PUSCH in the specific duration, and $M \geq N$; or if the reference HARQ process ID is $M$, then determining, according to the reference HARQ process ID, that the HARQ process ID corresponding to an $n$th PUSCH in the specific duration is $M + n - 1$, where $1 \leq n \leq N$, N is the number of TOs in the specific duration, the reference HARQ process ID is a minimum HARQ process ID applied to the PUSCH in the specific duration, and $M$ is an integer.

In an embodiment of the present disclosure, when the reference HARQ process ID is $M$, the terminal determines, according to the reference HARQ process ID, that the HARQ process ID corresponding to an $n$th PUSCH in the specific duration is $M - (n - 1)$, where $1 \leq n \leq N$, N is the number of TOs in the specific duration, the reference HARQ process ID is a maximum HARQ process ID applied to the PUSCH in the specific duration, and $M \geq N$.

For example, the number $N$ of TOs in the specific duration is 4, and the reference HARQ process ID is $M$, which is the maximum HARQ process ID applied to the PUSCH in the specific duration, where $M \geq N$. if $M$ is 4, the terminal determines, according to the reference HARQ process ID, that the HARQ process ID corresponding to the first PUSCH in the specific duration is 4-(1-1)=4, the HARQ process ID corresponding to the second PUSCH in the specific duration is 4-(2-1)=3, the HARQ process ID corresponding to the third PUSCH in the specific duration is 4-(3-1)=2, and the HARQ process ID corresponding to the fourth PUSCH in the specific duration is 4-(4-1)=1.

For example, the number $N$ of TOs in the specific duration is 4, and the reference HARQ process ID is $M$, which is the maximum HARQ process ID applied to the PUSCH in the specific duration, where $M \geq N$. If $M$ is 6, the terminal determines, according to the reference HARQ process ID, that the HARQ process ID corresponding to the first PUSCH in the specific duration is 6-(1-1)=6, the HARQ process ID corresponding to the second PUSCH in the specific duration is 6-(2-1)=5, the HARQ process ID corresponding to the third PUSCH in the specific duration is 6-(3-1)=4, and the HARQ process ID corresponding to the fourth PUSCH in the specific duration is 6-(4-1)=3.

It should be noted that the above examples are for illustration only, but are not intended to be specific limitations on the embodiments of the present disclosure. The number of TOs in the specific duration may also be 2/3/5 or more than 5, and the value of $M$ being the maximum HARQ process ID applied to the PUSCH in the specific duration may also be any other value.

In an embodiment of the present disclosure, when the reference HARQ process ID is $M$, the terminal determines, according to the reference HARQ process ID, that the HARQ process ID corresponding to an $n^{th}$ PUSCH in the specific duration is $M + n - 1$, where $1 \leq n \leq N$, $N$ is the number of TOs in the specific duration, the reference HARQ process ID is a minimum HARQ process ID applied to the PUSCH in the specific duration, and $M$ is an integer.

For example, the number $N$ of TOs in the specific duration is 4, and the reference HARQ process ID is $M$, which is the minimum HARQ process ID applied to the PUSCH in the specific duration, where $M$ is an integer. If $M$ is 1, the terminal determines, according to the reference HARQ process ID, that the HARQ process ID corresponding to the first PUSCH in the specific duration is 1+1-1=1, the HARQ process ID corresponding to the second PUSCH in the specific duration is 1+2-1=2, the HARQ process ID corresponding to the third PUSCH in the specific duration is 1+3-1=3, and the HARQ process ID corresponding to the fourth PUSCH in the specific duration is 1+4-1=4.

For example, the number $N$ of TOs in the specific duration is 4, and the reference HARQ process ID is $M$, which is the minimum HARQ process ID applied to the PUSCH in the specific duration, where $M$ is an integer. If $M$ is 3, the terminal determines, according to the reference HARQ process ID, that the HARQ process ID corresponding to the first PUSCH in the specific duration is 3+1-1=3, the HARQ process ID corresponding to the second PUSCH in the specific duration is 3+2-1=4, the HARQ process ID corresponding to the third PUSCH in the specific duration is 3+3-1=5, and the HARQ process ID corresponding to the fourth PUSCH in the specific duration is 3+4-1=6.

It should be noted that the above examples are for illustration only, but are not intended to be specific limitations on the embodiments of the present disclosure. The number of TOs in the specific duration may also be 2/3/5 or more than 5, and the value of $M$ being the minimum HARQ process ID applied to the PUSCH in the specific duration may also be any other value.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines parameter information in a specific duration; and determines, according to the parameter information, an HARQ process ID corresponding to a PUSCH in the specific duration, and the parameter information includes at least one of: an index of a TO, a group index of a TO, the number of TOs, a first offset corresponding to a TO, a second offset related to an HARQ process ID corresponding to a first PUSCH, or a reference HARQ process ID. Therefore, the terminal may determine the HARQ process ID corresponding to the PUSCH in the specific duration according to the parameter information, and may determine that different PUSCHs correspond to different HARQ process IDs, which is beneficial to the scheduling flexibility.

Reference is made to FIG. 4, which is a flowchart of another method for determining a hybrid automatic repeat request process identifier provided in an embodiment of the present disclosure. As shown in FIG. 4, the method is performed by a terminal, and may include, but is not limited to, the following steps.

At step S41, parameter information in a specific duration is determined according to a protocol agreement; or configuration information sent by a network side device is received, and parameter information in a specific duration is determined according to the configuration information.

In an embodiment of the present disclosure, determining, by the terminal, the parameter information in the specific duration may be determining the parameter information in the specific duration according to a protocol agreement.

In an embodiment of the present disclosure, determining, by the terminal, the parameter information in the specific duration may be receiving configuration information sent by the network side device, and determining the parameter information in the specific duration according to the configuration information.

Receiving, by the terminal, the configuration information sent by the network side device may be receiving a DCI signaling sent by the network side device, where the DCI signaling includes the configuration information; or may be receiving an RRC signaling sent by the network side device, where the RRC signaling includes the configuration information.

The parameter information includes at least one of: an index of a TO, a group index of a TO, the number of TOs, a first offset corresponding to a TO, a second offset related to an HARQ process ID corresponding to a first PUSCH, or a reference HARQ process ID.

For the relevant description of the specific duration, the PUSCH and the parameter information in the specific duration, reference is made to the relevant description in the above embodiments, which will not be repeated here.

At step S42, an HARQ process ID corresponding to a PUSCH in the specific duration is determined according to the parameter information.

For the relevant description of step S42, reference is made to the relevant description in the above embodiments, which will not be repeated here.

It should be noted that in the embodiments of the present disclosure, steps S41 and S42 may be implemented separately or in combination with any other steps in the embodiments of the present disclosure, for example, steps S41 and S42 may be implemented in combination with steps S21 to S22 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines parameter information in a specific duration according to a protocol agreement, or receives configuration information sent by a network side device and determines parameter information in a specific duration according to the configuration information; and determines an HARQ process ID corresponding to a PUSCH in the specific duration according to the parameter information, where the parameter information includes at least one of: an index of a TO, a group index of a TO, the number of TOs, a first offset corresponding to a TO, a second offset related to an HARQ process ID corresponding to a first PUSCH, or a reference HARQ process ID. Therefore, the terminal may determine the HARQ process ID corresponding to the PUSCH in the specific duration according to the parameter information, and may determine that different PUSCHs correspond to different HARQ process IDs, which is beneficial to the scheduling flexibility.

Reference is made to FIG. 5, which is a flowchart of yet another method for determining a hybrid automatic repeat request process identifier provided in an embodiment of the present disclosure. As shown in FIG. 5, the method is performed by a terminal, and may include, but is not limited to, the following steps.

At step S51, an index of a TO in a specific duration is determined.

In an embodiment of the present disclosure, determining, by the terminal, the index of the TO in the specific duration may be performed based on the implementation of the terminal, or based on the configuration of the network side device, or based on the protocol agreement, or the like.

In some embodiments, the terminal may determine the index of the TO in the specific duration according to a protocol agreement.

In some embodiments, the index of the TO is specified by a protocol; or it is specified by a protocol that an index of a $k^{th}$ TO in the specific duration is $a + (k-1) \times b$, where $a$ and $b$ are both integers, $1 \leq k \leq K$, $k$ is an integer, and $K$ is the number of TOs in the specific duration.

In an embodiment of the present disclosure, the index of the TO is specified by a protocol, so that the terminal may determine the index of the TO in the specific duration according to the protocol agreement.

For example, the specific duration includes 2 TOs, and the indexes of the TOs are specified by a protocol, where the index of the first TO#1 is 1, and the index of the second TO#2 is 2. Therefore, the terminal may determine the indexes of the TOs in the specific duration according to the protocol agreement.

In an embodiment of the present disclosure, it is specified by a protocol that an index of a $k^{th}$ TO in the specific duration is $a + (k-1) \times b$, where $a$ and $b$ are both integers, $1 \leq k \leq K$, $k$ is an integer, and $K$ is the number of TOs in the specific duration. Therefore, the terminal may determine the index of the TO in the specific duration according to the protocol agreement.

For example, the specific duration includes 2 TOs, $K$ is 2, and when $a$ is 1 and $b$ is 1, it is specified by a protocol that the index of the first TO#1 in the specific duration is $1 + (1-1) \times 1 = 1$, and the index of the second TO#2 is $1 + (2-1) \times 1 = 2$. Therefore, the terminal may determine the index of the TO in the specific duration according to the protocol agreement.

It should be noted that the above examples are for illustration only, but are not intended to be specific limitations on the embodiments of the present disclosure. The number of TOs in the specific duration may also be 3 or more, and the values of $a$ and $b$ may also be any other values.

In an embodiment of the present disclosure, the terminal may receive configuration information sent by the network side device, and determine the index of the TO in the specific duration according to the configuration information.

Receiving, by the terminal, the configuration information sent by the network side device may be receiving a DCI signaling sent by the network side device, where the DCI signaling includes the configuration information; or may be receiving an RRC signaling sent by the network side device, where the RRC signaling includes the configuration information.

In some embodiments, the configuration information includes first configuration information, where the first configuration information indicates the index of the TO in the specific duration; or second configuration information, where the second configuration information indicates the index of the first TO in the specific duration.

In an embodiment of the present disclosure, the terminal receives configuration information sent by the network side device, and the configuration information may include first configuration information, where the first configuration information indicates the index of the TO in the specific duration. Thus, the terminal may determine the index of the TO in the specific duration according to the first configuration information.

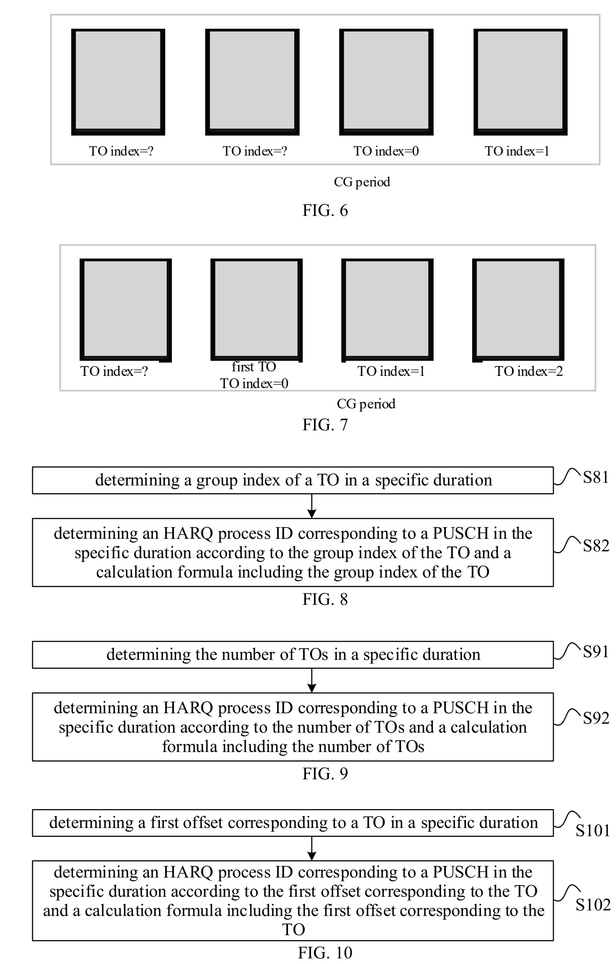

For example, as shown in FIG. 6, the specific duration includes the last two TOs of one CG period, and the terminal receives the first configuration information sent by the network side device. The first configuration information indicates the index of the TO in the specific duration, and may indicate that the index of the third TO#3 in the CG period is 0, and the index of the fourth TO#4 in the CG period is 1. Therefore, the terminal may determine the index of the TO in the specific duration according to the first configuration information.

In an embodiment of the present disclosure, the terminal receives configuration information sent by the network side device, and the configuration information may include second configuration information, where the second configuration information indicates the index of the first TO in the specific duration. Thus, the terminal may determine the index of the first TO in the specific duration according to the second configuration information, and the terminal may determine the index of the TO that follows the first TO in chronological order in an implicit manner.

For example, as shown in FIG. 7, the specific duration includes the last three TOs of one CG period. The terminal receives the second configuration information sent by the network side device, and determines that the second configuration information indicates that the index of the first TO in the specific duration is 0, where the first TO may be the second TO#2 in the CG period. Therefore, the terminal may determine that in the specific duration, the index of the third TO#3 in the CG period is 1 and the index of the fourth TO#4 in the CG period is 2 according to the time sequence of TOs.

Alternatively, the first TO may be the first TO#1 in the CG period. Thus, the terminal may determine that in the specific duration, the index of the second TO#2 is 1, the index of the third TO#3 is 2, and the index of the fourth TO#4 is 3 according to the time sequence of TOs.

It should be noted that the above examples are for illustration only, but are not intended to be specific limitations on the embodiments of the present disclosure. The number of TOs in the specific duration may also be 2/3/5 or more than 5, and the index of the first TO in the specific duration may also be any other value.

For the relevant description of the specific duration and the PUSCH, reference is made to the description in the above embodiments, which will not be repeated here.

At step S52, an HARQ process ID corresponding to a PUSCH in the specific duration is determined according to the index of the TO and a calculation formula including the index of the TO.

In an embodiment of the present disclosure, when determining the index of the TO (IndexOfTO) in the specific duration, the terminal may determine the HARQ process ID (HARQ Process ID) corresponding to the PUSCH in the specific duration based on the IndexOfTO and a calculation formula including the IndexOfTO.

In some embodiments, the terminal may determine that the calculation formula including the index of the TO is a first calculation formula.

In some embodiments, as the calculation formula including the IndexOfTO, the first calculation formula satisfies the following relationship:

HARQ Process ID = [floor(CURRENT_symbol/periodicity/ IndexOfTO)] modulo nrofHARQ-Processes.

In some embodiments, as the calculation formula including the IndexOfTO, the first calculation formula satisfies the following relationship:

HARQ Process ID = [floor(CURRENT_symbol/periodicity * IndexOfTO)] modulo nrofHARQ-Processes.

In some embodiments, as the calculation formula including the IndexOfTO, the first calculation formula satisfies the following relationship:

HARQ Process ID = [floor(CURRENT_symbol/periodicity / IndexOfTO)] modulo nrofHARQ-Processes + harq-ProcID-Offset2.

In some embodiments, as the calculation formula including the IndexOfTO, the first calculation formula satisfies the following relationship:

HARQ Process ID = [floor(CURRENT_symbol/periodicity * IndexOfTO)] modulo nrofHARQ-Processes + harq-ProcID-Offset2.

In the relationships satisfied by the above first calculation formula, *floor* is a rounding-down operation; *modulo* is a modulo operation; *CURRENT_symbol* is a current symbol, which may be determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition or retransmission timing.

It should be noted that in the embodiments of the present disclosure, steps S51 and S52 may be implemented separately or in combination with any other steps in the embodiments of the present disclosure, for example, steps S51 and S52 may be implemented in combination with steps S21 to S22 and/or steps S41 and S42 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines an index of a TO in a specific duration, and determines an HARQ process ID corresponding to a PUSCH in the specific duration according to the index of the TO and a calculation formula including the index of the TO. Therefore, the terminal may determine the HARQ process ID corresponding to the PUSCH in the specific duration, and may determine that different PUSCHs correspond to different HARQ process IDs, which is beneficial to the scheduling flexibility.

Reference is made to FIG. 8, which is a flowchart of yet another method for determining a hybrid automatic repeat request process identifier provided in an embodiment of the present disclosure. As shown in FIG. 8, the method is performed by a terminal, and may include, but is not limited to, the following steps.

At step S81, a group index of a TO in a specific duration is determined.

In an embodiment of the present disclosure, determining, by the terminal, the group index of the TO in the specific duration may be performed based on the implementation of the terminal, or based on the configuration of the network side device, or based on the protocol agreement, or the like.

The specific duration may include one or more TO groups, different TO groups have different group indexes, each TO group may include one or more TOs, and one or more TOs in the same TO group correspond to the same group index.

For example, the specific duration includes two TO groups, the first TO group includes TO#1 and TO#2, and the second TO group includes TO#3, where the group indexes of TO#1 and TO#2 may be 0, and the group index of the TO#3 may be 1.

In some embodiments, the terminal may determine the group index of the TO in the specific duration according to a protocol agreement.

In some embodiments, it is specified in a protocol that the number G of TO groups corresponds to group indexes 0 to $G$-1, G is less than or equal to $N,$ and $N$ is the number of TOs in the specific duration.

For example, Nis 7, and the seven TOs are TO#1, TO#2, TO#3, TO#4, TO#5, TO#6, and TO#7, respectively. It is specified in a protocol that the number G of TO groups is 3, corresponding to 0, 1, and 2, respectively. Then, the terminal may determine that TO#1 and TO#2 are in the first group corresponding to group index 0, TO#3 and TO#4 are in the second group corresponding to group index 1, and TO#5, TO#6, and TO#7 are in the third group corresponding to group index 2.

In some embodiments, the number G of TO groups and the associated TOs in each group are specified in a protocol, the G groups correspond to group indexes 0 to $G$-1, respectively, G is less than or equal to $N,$ and $N$ is the number of TOs in the specific duration, where the sum of the number of associated TOs in each group is equal to the number of TOs in the specific duration.

For example, it is specified in a protocol that the number of TO groups is 2, the first group of associated TOs includes TO#1 and TO#2, and the second group of associated TOs includes TO#3 and TO#4, where the sum of the number of associated TOs in each group is 4, which is equal to the number of TOs in the specific duration being 4.

It should be noted that the above examples are for illustration only, but are not intended to be specific limitations on the embodiments of the present disclosure. The number of TOs in the specific duration may also be other values, and the group index of the TO in the specific duration may also be any other value.

In some embodiments, the terminal may receive configuration information sent by the network side device, and determine the group index of the TO in the specific duration according to the configuration information.

Receiving, by the terminal, the configuration information sent by the network side device may be receiving a DCI signaling sent by the network side device, where the DCI signaling includes the configuration information; or may be receiving an RRC signaling sent by the network side device, where the RRC signaling includes the configuration information.

In some embodiments, the configuration information indicates that the number G of TO groups corresponds to group indexes 0 to $G$-1 respectively, G is less than or equal to $N,$ and $N$ is the number of TOs in the specific duration.

For example, Nis 7, and the seven TOs are TO#1, TO#2, TO#3, TO#4, TO#5, TO#6, and TO#7, respectively. The configuration information indicates that the number G of TO groups is 3, corresponding to 0, 1, and 2, respectively. Then, the terminal may determine that TO#1 and TO#2 are in the first group corresponding to group index 0, TO#3 and TO#4 are in the second group corresponding to group index 1, and TO#5, TO#6, and TO#7 are in the third group corresponding to group index 2.

In some embodiments, the configuration information indicates the number G of TO groups and the associated TOs in each group, the G groups correspond to group indexes 0 to $G$-1, respectively, G is less than or equal to $N,$ and $N$ is the number of TOs in the specific duration, where the sum of the number of associated TOs in each group is equal to the number of TOs in the specific duration.

For example, the configuration information indicates that the number of TO groups is 2, the first group of associated TOs includes TO#1 and TO#2, and the second group of associated TOs includes TO#3 and TO#4, where the sum of the number of associated TOs in each group is 4, which is equal to the number of TOs in the specific duration being 4.

It should be noted that the above examples are for illustration only, but are not intended to be specific limitations on the embodiments of the present disclosure. The number of TOs in the specific duration may also be other values, and the group index of the TO in the specific duration may also be any other value.

For the relevant description of the specific duration and the PUSCH, reference is made to the description in the above embodiments, which will not be repeated here.

At step S82, an HARQ process ID corresponding to a PUSCH in the specific duration is determined according to the group index of the TO and a calculation formula including the group index of the TO.

In an embodiment of the present disclosure, when determining the group index of the TO (IndexOfTOgroup) in the specific duration, the terminal may determine the HARQ process ID (HARQ Process ID) corresponding to the PUSCH in the specific duration based on the IndexOfTOgroup and a calculation formula including the IndexOfTOgroup.

In some embodiments, the terminal may determine that the calculation formula including the group index of the TO is a second calculation formula.

In some embodiments, as the calculation formula including the IndexOfTOgroup, the second calculation formula satisfies the following relationship:

HARQ Process ID = [floor(CURRENT_symbol / periodicity/ IndexOfTOgroup)] modulo nrofHARQ-Processes.

In some embodiments, as the calculation formula including the IndexOfTOgroup, the second calculation formula satisfies the following relationship:

HARQ Process ID = [floor(CURRENT_symbol / periodicity * IndexOfTOgroup)] modulo nrofHARQ-Processes.

In some embodiments, as the calculation formula including the IndexOfTOgroup, the second calculation formula satisfies the following relationship:

HARQ Process ID = [floor(CURRENT_symbol / periodicity / IndexOfTOgroup)] modulo nrofHARQ-Processes + harq-ProcID-Offset2.

In some embodiments, as the calculation formula including the IndexOfTOgroup, the second calculation formula satisfies the following relationship:

HARQ Process ID = [floor(CURRENT_symbol / periodicity * IndexOfTOgroup)] modulo nrofHARQ-Processes + harq-ProcID-Offset2.

In the relationships satisfied by the above second calculation formula, *floor* is a rounding-down operation; *modulo* is a modulo operation; *CURRENT_symbol* is a current symbol, which may be determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

In some embodiments, PUSCHs in TOs with the same group index correspond to the same HARQ process ID.

In an embodiment of the present disclosure, PUSCHs in TOs with the same group index may correspond to the same HARQ process ID.

It should be noted that in the embodiments of the present disclosure, steps S81 and S82 may be implemented separately or in combination with any other steps in the embodiments of the present disclosure, for example, steps S81 and S82 may be implemented in combination with steps S21 to S22 and/or steps S41 and S42 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines a group index of a TO in a specific duration, and determines an HARQ process ID corresponding to a PUSCH in the specific duration according to the group index of the TO and a calculation formula including the group index of the TO. Therefore, the terminal may determine the HARQ process ID corresponding to the PUSCH in the specific duration, and may determine that different PUSCHs correspond to different HARQ process IDs, which is beneficial to the scheduling flexibility.

Reference is made to FIG. 9, which is a flowchart of yet another method for determining a hybrid automatic repeat request process identifier provided in an embodiment of the present disclosure. As shown in FIG. 9, the method is performed by a terminal, and may include, but is not limited to, the following steps.

At step S91, the number of TOs in a specific duration is determined.

In an embodiment of the present disclosure, determining, by the terminal, the number of TOs in the specific duration may be performed based on the implementation of the terminal, or based on the configuration of the network side device, or based on the protocol agreement, or the like.

For the relevant description of the specific duration and the PUSCH, reference is made to the description in the above embodiments, which will not be repeated here.

At step S92, an HARQ process ID corresponding to a PUSCH in the specific duration is determined according to the number of TOs and a calculation formula including the number of TOs.

In an embodiment of the present disclosure, when determining the number (N) of TOs in the specific duration, the terminal may determine the HARQ process ID (HARQ Process ID) corresponding to the PUSCH in the specific duration according to $N$ and a calculation formula including $N$.

In some embodiments, the terminal may determine that the calculation formula including the number $N$ of TOs is a third calculation formula.

In some embodiments, as the calculation formula including $N$, the third calculation formula satisfies the following relationship:

HARQ Process ID = [floor(CURRENT_symbol/periodicity/ N)] modulo nrofHARQ-Processes.

In some embodiments, as the calculation formula including $N$, the third calculation formula satisfies the following relationship:

HARQ Process ID = [floor(CURRENT_symbol/periodicity * N)] modulo nrofHARQ-Processes.

In some embodiments, as the calculation formula including $N$, the third calculation formula satisfies the following relationship:

HARQ Process ID = [floor(CURRENT_symbol / periodicity / N)] modulo nrofHARQ-Processes + harq-ProcID-Offset2.

In some embodiments, as the calculation formula including $N$, the third calculation formula satisfies the following relationship:

HARQ Process ID = [floor(CURRENT_symbol / periodicity * N)] modulo nrofHARQ-Processes + harq-ProcID-Offset2.

In some embodiments, as the calculation formula including $N$, the third calculation formula satisfies the following relationship:

HARQ Process ID = [floor(CURRENT_symbol/periodicity/ N*2)] modulo nrofHARQ-Processes.

In some embodiments, as the calculation formula including $N$, the third calculation formula satisfies the following relationship:

HARQ Process ID = [floor(CURRENT_symbol/periodicity * N/2)] modulo nrofHARQ-Processes.

In some embodiments, as the calculation formula including $N$, the third calculation formula satisfies the following relationship:

HARQ Process ID = [floor(CURRENT_symbol / periodicity / N*2)] modulo nrofHARQ-Processes + harq-ProcID-Offset2.

In some embodiments, as the calculation formula including *N*, the third calculation formula satisfies the following relationship:

HARQ Process ID = [floor(CURRENT_symbol / periodicity * N/2)] modulo nrofHARQ-Processes + harq-ProcID-Offset2.

In the relationships satisfied by the above third calculation formula, *floor* is a rounding-down operation; *modulo* is a modulo operation; *CURRENT_symbol* is a current symbol, which may be determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

It should be noted that in the embodiments of the present disclosure, steps S91 and S92 may be implemented separately or in combination with any other steps in the embodiments of the present disclosure, for example, steps S91 and S92 may be implemented in combination with steps S21 to S22 and/or steps S41 and S42 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines the number of TOs in a specific duration, and determines an HARQ process ID corresponding to a PUSCH in the specific duration according to the number of TOs and a calculation formula including the number of TOs. Therefore, the terminal may determine the HARQ process ID corresponding to the PUSCH in the specific duration, and may determine that different PUSCHs correspond to different HARQ process IDs, which is beneficial to the scheduling flexibility.

Reference is made to FIG. 10, which is a flowchart of yet another method for determining a hybrid automatic repeat request process identifier provided in an embodiment of the present disclosure. As shown in FIG. 10, the method is performed by a terminal, and may include, but is not limited to, the following steps.

At step S101, a first offset corresponding to a TO in a specific duration is determined.

In an embodiment of the present disclosure, determining, by the terminal, the first offset corresponding to the TO in the specific duration may be performed based on the implementation of the terminal, or based on the configuration of the network side device, or based on the protocol agreement, or the like.

The first offset corresponding to the TO may be related to the index of the TO.

For example, the first offset corresponding to the TO may be the index of the TO, or the first offset corresponding to the TO may be the index of the TO + 1, or the first offset corresponding to the TO may be set according to the granularity of the TO, or the like.

For the relevant description of the specific duration and the PUSCH, reference is made to the description in the above embodiments, which will not be repeated here.

At step S102, an HARQ process ID corresponding to a PUSCH in the specific duration is determined according to the first offset corresponding to the TO and a calculation formula including the first offset corresponding to the TO.

In an embodiment of the present disclosure, when determining the first offset (*harq-ProcID-Offset3*) corresponding to the TO in the specific duration, the terminal may determine the HARQ process ID (HARQ Process ID) corresponding to the PUSCH in the specific duration according to the *harq-ProcID-Offset3* and a calculation formula including the *harq-ProcID-Offset3.*

In some embodiments, the terminal may determine that the calculation formula including the first offset *harq-ProcID-Offset3* corresponding to the TO is a fourth calculation formula.

In some embodiments, as the calculation formula including the *harq-ProcID-Offset3,* the fourth calculation formula satisfies the following relationship:

HARQ Process ID = [floor(CURRENT_symbol/periodicity)] modulo nrofHARQ-Processes + harq-ProcID-Offset3.

In some embodiments, as the calculation formula including the *harq-ProcID-Offset3,* the fourth calculation formula satisfies the following relationship:

HARQ Process ID = [floor(CURRENT_symbol/periodicity)] modulo nrofHARQ-Processes + harq-ProcID-Offset3.

In some embodiments, as the calculation formula including the *harq-ProcID-Offset3,* the fourth calculation formula satisfies the following relationship:

HARQ Process ID = [floor(CURRENT_symbol / periodicity)] modulo nrofHARQ-Processes + harq-ProcID-Offset2 + harq-ProcID-Offset3.

In some embodiments, as the calculation formula including the *harq-ProcID-Offset3,* the fourth calculation formula satisfies the following relationship:

HARQ Process ID = [floor(CURRENT_symbol / periodicity)] modulo nrofHARQ-Processes + harq-ProcID-Offset2 + harq-ProcID-Offset3.

In the relationships satisfied by the above fourth calculation formula, *floor* is a rounding-down operation; *modulo* is a modulo operation; *CURRENT_symbol* is a current symbol, which may be determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Furthermore, the first offset *harq-ProcID-Offset3* corresponding to the TO is determined from the index of the TO *IndexOfTO* in the specific duration, for example, the *harq-ProcID-Offset3* is equal to the index of the TO *IndexOfTO* in the specific duration, or the *harq-ProcID-Offset3* is equal to *IndexOfTO* + 1. Alternatively, the *harq-ProcID-Offset3* is configured by the network side device via an RRC signaling, and the configuration granularity may be to configure one *harq-ProcID-Offset3* for each TO, or to configure one *harq-ProcID-Offset3* for multiple TOs, or to configure one *harq-ProcID-Offset3* within one CG period, and so on.

It should be noted that in the embodiments of the present disclosure, steps S101 and S102 may be implemented separately or in combination with any other steps in the embodiments of the present disclosure, for example, steps S101 and S102 may be implemented in combination with steps S21 to S22 and/or steps S41 and S42 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines a first offset corresponding to a TO in a specific duration, and determines an HARQ process ID corresponding to a PUSCH in the specific duration according to the first offset corresponding to the TO and a calculation formula including the first offset corresponding to the TO. Therefore, the terminal may determine the HARQ process ID corresponding to the PUSCH in the specific duration, and may determine that different PUSCHs correspond to different HARQ process IDs, which is beneficial to the scheduling flexibility.

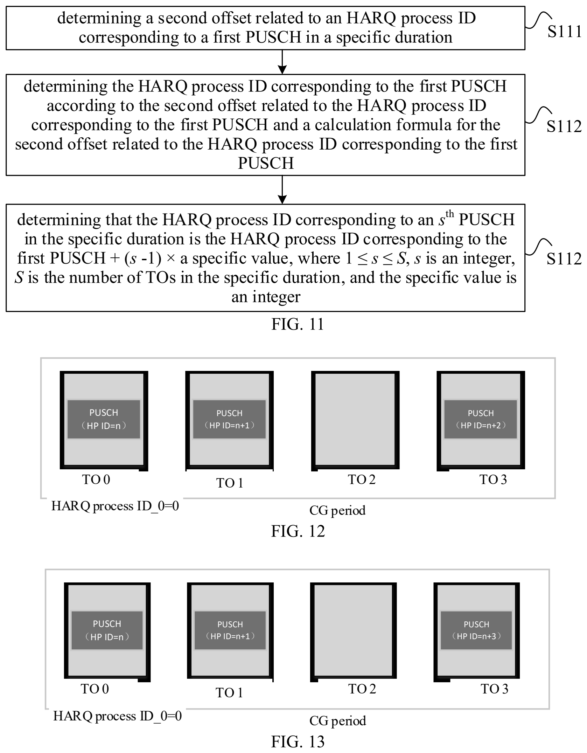

Reference is made to FIG. 11, which is a flowchart of yet another method for determining a hybrid automatic repeat request process identifier provided in an embodiment of the present disclosure. As shown in FIG. 11, the method is performed by a terminal, and may include, but is not limited to, the following steps.

At step S111, a second offset related to an HARQ process ID corresponding to a first PUSCH in a specific duration is determined.

In an embodiment of the present disclosure, determining, by the terminal, the second offset related to the HARQ process ID corresponding to the first PUSCH may be performed based on the implementation of the terminal, or based on the configuration of the network side device, or based on the protocol agreement, or the like.

For the relevant description of the specific duration and the PUSCH, reference is made to the description in the above embodiments, which will not be repeated here.

At step S112, the HARQ process ID corresponding to the first PUSCH is determined according to the second offset related to the HARQ process ID corresponding to the first PUSCH and a calculation formula with the second offset related to the HARQ process ID corresponding to the first PUSCH.

At step S113, it is determined that the HARQ process ID corresponding to an $s^{th}$ PUSCH in the specific duration is the HARQ process ID corresponding to the first PUSCH + (s - 1) $\times$ a specific value, where $1 \leq s \leq S$, $s$ is an integer, S is the number of TOs in the specific duration, and the specific value is an integer.

In an embodiment of the present disclosure, the terminal may determine the HARQ process ID corresponding to the first PUSCH (first HARQ Process ID) according to the second offset related to the HARQ process ID corresponding to the first PUSCH and a calculation formula with the second offset related to the HARQ process ID corresponding to the first PUSCH.

In some embodiments, the terminal may determine that the calculation formula including the second offset related to the HARQ process ID corresponding to the first PUSCH is a fifth calculation formula.

In some embodiments, as the calculation formula including the calculation formula with the second offset related to the HARQ process ID corresponding to the first PUSCH, the fifth calculation formula satisfies the following relationship:

HARQ Process ID = [floor(CURRENT_symbol/periodicity)] modulo nrofHARQ-Processes + harq-ProcID-Offset4.

In some embodiments, as the calculation formula including the calculation formula with the second offset related to the HARQ process ID corresponding to the first PUSCH, the fifth calculation formula satisfies the following relationship:

HARQ Process ID = [floor(CURRENT_symbol/periodicity)] modulo nrofHARQ-Processes + harq-ProcID-Offset4.

In some embodiments, as the calculation formula including the calculation formula with the second offset related to the HARQ process ID corresponding to the first PUSCH, the fifth calculation formula satisfies the following relationship:

HARQ Process ID = [floor(CURRENT_symbol / periodicity)] modulo nrofHARQ-Processes + harq-ProcID-Offset2 + harq-ProcID-Offset4.

In some embodiments, as the calculation formula including the calculation formula with the second offset related to the HARQ process ID corresponding to the first PUSCH, the fifth calculation formula satisfies the following relationship:

HARQ Process ID = [floor(CURRENT_symbol / periodicity)] modulo nrofHARQ-Processes + harq-ProcID-Offset2 + harq-ProcID-Offset4.

In the relationships satisfied by the above fifth calculation formula, *floor* is a rounding-down operation; *modulo* is a modulo operation; *CURRENT_symbol* is a current symbol, which may be determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Furthermore, the second offset (*harq-ProcID-Offset4*) related to the HARQ process ID corresponding to the first PUSCH is configured via an RRC signaling sent by the network side device. In addition, when the *harq-ProcID-Offset4* is not configured, the terminal may use the default value as 0 or *N*. *N* is the number of TOs configured in one CG period.

In an embodiment of the present disclosure, the second offset related to the HARQ process ID corresponding to the first PUSCH may be used by the terminal to determine the HARQ process ID corresponding to the first PUSCH. If the specific duration includes multiple TOs for transmitting multiple PUSCHs, the terminal may determine the HARQ process ID corresponding to the PUSCH after the first PUSCH according to a specific rule.

In some embodiments, the specific rule may be to increment the PUSCH by a specific value according to the time sequence of PUSCHs in the specific duration.

For example, as shown in FIG. 12, the specific duration may be one CG period, and the CG period includes 4 TOs, among which the PUSCH is transmitted in TO#0, TO#1 and TO#3. When it is determined that the HARQ process ID corresponding to the first PUSCH, i.e., TO#0, is 0, if the specific value is 1, the HARQ process ID corresponding to the PUSCH after the first PUSCH is determined by incrementing the specific value according to the time sequence of the PUSCHs in the specific duration. Then, it may be determined that the HARQ process ID corresponding to TO#1 (the second PUSCH) is 1, and the HARQ process ID corresponding to TO#3 (the third PUSCH) is 2.

In some embodiments, the specific rule may be to increment the TO by a specific value according to the time sequence of PUSCHs in the specific duration.

For example, as shown in FIG. 13, the specific duration may be one CG period, and the CG period includes 4 TOs, among which the PUSCH is transmitted in TO#0, TO#1 and TO#3. When it is determined that the HARQ process ID corresponding to the first PUSCH, i.e., TO#0, is 0, if the specific value is 1, the HARQ process ID corresponding to the PUSCH after the first PUSCH is determined by incrementing the specific value according to the time sequence of TOs in the specific duration. Then, it may be determined that the HARQ process ID corresponding to TO#1 (the second PUSCH) is 1, the HARQ process ID corresponding to TO#2 is 2, and the HARQ process ID corresponding to TO#3 (the third PUSCH) is 3.

It should be noted that in the embodiments of the present disclosure, steps S111 and S112 may be implemented separately or in combination with any other steps in the embodiments of the present disclosure, for example, steps S111 and S112 may be implemented in combination with steps S21 to S22 and/or steps S41 and S42 in the embodiments of the present disclosure, which is not specifically limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines a second offset related to an HARQ process ID corresponding to a first PUSCH in a specific duration, determines the HARQ process ID corresponding to the first PUSCH according to the second offset related to the HARQ process ID corresponding to the first PUSCH and a calculation formula with the second offset related to the HARQ process ID corresponding to the first PUSCH, and determines that the HARQ process ID corresponding to an $s^{th}$ PUSCH in the specific duration is the HARQ process ID corresponding to the first PUSCH + (s -1) $\times$ a specific value. Therefore, the terminal may determine the HARQ process ID corresponding to the PUSCH in the specific duration, and may determine that different PUSCHs correspond to different HARQ process IDs, which is beneficial to the scheduling flexibility.

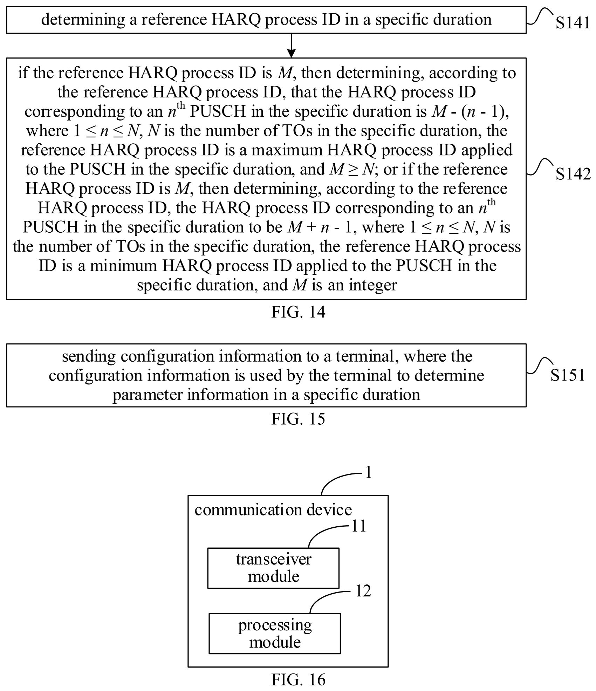

Reference is made to FIG. 14, which is a flowchart of yet another method for determining a hybrid automatic repeat request process identifier provided in an embodiment of the present disclosure. As shown in FIG. 14, the method is performed by a terminal, and may include, but is not limited to, the following steps.

At step S141, a reference HARQ process ID in a specific duration is determined.

In an embodiment of the present disclosure, determining, by the terminal, the reference HARQ process ID in the specific duration may be performed based on the implementation of the terminal, or based on the configuration of the network side device, or based on the protocol agreement, or the like.

The reference HARQ process ID may be the largest HARQ process ID, the smallest HARQ process ID, an HARQ process ID corresponding to a PUSCH transmitted in a certain TO, or the like.

For the relevant description of the specific duration and the PUSCH, reference is made to the description in the above embodiments, which will not be repeated here.

At step S142, if the reference HARQ process ID is $M$, then it is determined, according to the reference HARQ process ID, that the HARQ process ID corresponding to an $n^{th}$ PUSCH in the specific duration is $M - (n - 1)$, where $1 \leq n \leq N$, $N$ is the number of TOs in the specific duration, the reference HARQ process ID is a maximum HARQ process ID applied to the PUSCH in the specific duration, and $M \geq N$; or if the reference HARQ process ID is $M$, then it is determined, according to the reference HARQ process ID, that the HARQ process ID corresponding to an $n^{th}$ PUSCH in the specific duration is $M + n - 1$, where $1 \leq n \leq N$, $N$ is the number of TOs in the specific duration, the reference HARQ process ID is a minimum HARQ process ID applied to the PUSCH in the specific duration, and M is an integer.

In an embodiment of the present disclosure, when the reference HARQ process ID is $M$, the terminal determines, according to the reference HARQ process ID, that the HARQ process ID corresponding to an $n^{th}$ PUSCH in the specific duration is $M - (n - 1)$, where $1 \leq n \leq N$, $N$ is the number of TOs in the specific duration, the reference HARQ process ID is a maximum HARQ process ID applied to the PUSCH in the specific duration, and $M \geq N$.

For example, the number $N$ of TOs in the specific duration is 4, and the reference HARQ process ID is $M$, which is the maximum HARQ process ID applied to the PUSCH in the specific duration, where $M \geq N$. if $M$ is 4, the terminal determines, according to the reference HARQ process ID, that the HARQ process ID corresponding to the first PUSCH in the specific duration is 4-(1-1)=4, the HARQ process ID corresponding to the second PUSCH in the specific duration is 4-(2-1)=3, the HARQ process ID corresponding to the third PUSCH in the specific duration is 4-(3-1)=2, and the HARQ process ID corresponding to the fourth PUSCH in the specific duration is 4-(4-1)=1.

For example, the number $N$ of TOs in the specific duration is 4, and the reference HARQ process ID is $M$, which is the maximum HARQ process ID applied to the PUSCH in the specific duration, where $M \geq N$. If $M$ is 6, the terminal determines, according to the reference HARQ process ID, that the HARQ process ID corresponding to the first PUSCH in the specific duration is 6-(1-1)=6, the HARQ process ID corresponding to the second PUSCH in the specific duration is 6-(2-1)=5, the HARQ process ID corresponding to the third PUSCH in the specific duration is 6-(3-1)=4, and the HARQ process ID corresponding to the fourth PUSCH in the specific duration is 6-(4-1)=3.

It should be noted that the above examples are for illustration only, but are not intended to be specific limitations on the embodiments of the present disclosure. The number of TOs in the specific duration may also be 2/3/5 or more than 5, and the value of $M$ being the maximum HARQ process ID applied to the PUSCH in the specific duration may also be any other value.

In an embodiment of the present disclosure, when the reference HARQ process ID is $M$, the terminal determines, according to the reference HARQ process ID, that the HARQ process ID corresponding to an $n^{th}$ PUSCH in the specific duration is $M + n - 1$, where $1 \leq n \leq N$, $N$ is the number of TOs in the specific duration, the reference HARQ process ID is a minimum HARQ process ID applied to the PUSCH in the specific duration, and $M$ is an integer.

For example, the number $N$ of TOs in the specific duration is 4, and the reference HARQ process ID is $M$, which is the minimum HARQ process ID applied to the PUSCH in the specific duration, where $M$ is an integer. If $M$ is 1, the terminal determines, according to the reference HARQ process ID, that the HARQ process ID corresponding to the first PUSCH in the specific duration is 1+1-1=1, the HARQ process ID corresponding to the second PUSCH in the specific duration is 1+2-1=2, the HARQ process ID corresponding to the third PUSCH in the specific duration is 1+3-1=3, and the HARQ process ID corresponding to the fourth PUSCH in the specific duration is 1+4-1=4.

For example, the number $N$ of TOs in the specific duration is 4, and the reference HARQ process ID is $M$, which is the minimum HARQ process ID applied to the PUSCH in the specific duration, where $M$ is an integer. If $M$ is 3, the terminal determines, according to the reference HARQ process ID, that the HARQ process ID corresponding to the first PUSCH in the specific duration is 3+1-1=3, the HARQ process ID corresponding to the second PUSCH in the specific duration is 3+2-1=4, the HARQ process ID corresponding to the third PUSCH in the specific duration is 3+3-1=5, and the HARQ process ID corresponding to the fourth PUSCH in the specific duration is 3+4-1=6.

It should be noted that the above examples are for illustration only, but are not intended to be specific limitations on the embodiments of the present disclosure. The number of TOs in the specific duration may also be 2/3/5 or more than 5, and the value of $M$ being the minimum HARQ process ID applied to the PUSCH in the specific duration may also be any other value.

It should be noted that in the embodiments of the present disclosure, steps S141 and S142 may be implemented separately or in combination with any other steps in the embodiments of the present disclosure, for example, steps S141 and S142 may be implemented in combination with steps S21 to S22 and/or steps S41 and S42 in the embodiments of the present disclosure, which is not limited in the embodiments of the present disclosure.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a terminal determines a reference HARQ process ID in a specific duration; and if the reference HARQ process ID is $M$, then the terminal determines, according to the reference HARQ process ID, that the HARQ process ID corresponding to an $n^{th}$ PUSCH in the specific duration is $M - (n - 1)$, where $1 \leq n \leq N$, $N$ is the number of TOs in the specific duration, the reference HARQ process ID is a maximum HARQ process ID applied to the PUSCH in the specific duration, and $M \geq N$; or if the reference HARQ process ID is $M$, then the terminal determines, according to the reference HARQ process ID, that the HARQ process ID corresponding to an $n^{th}$ PUSCH in the specific duration is $M + n - 1$, where $1 \leq n \leq N$, $N$ is the number of TOs in the specific duration, the reference HARQ process ID is a minimum HARQ process ID applied to the PUSCH in the specific duration, and $M$ is an integer. Therefore, the terminal may determine the HARQ process ID corresponding to the PUSCH in the specific duration, and may determine that different PUSCHs correspond to different HARQ process IDs, which is beneficial to the scheduling flexibility.

Reference is made to FIG. 15, which is a flowchart of yet another method for determining a hybrid automatic repeat request process identifier provided in an embodiment of the present disclosure. As shown in FIG. 15, the method is performed by a network side device, and may include, but is not limited to, the following step.

At step S151, configuration information is sent to a terminal, where the configuration information is used by the terminal to determine parameter information in a specific duration.

In an embodiment of the present disclosure, the network side device may send configuration information to a terminal, and the configuration information is used by the terminal to determine parameter information in the specific duration.

In an embodiment of the present disclosure, the network side device may send the configuration information to the terminal when the terminal needs to determine the HARQ process IDs corresponding to one or more PUSCHs in the specific duration.

For example, in the case of an uplink grant-free transmission, the network side device may send the configuration information to the terminal when determining that the terminal needs to determine the HARQ process IDs corresponding to one or more PUSCHs in the specific duration.

It should be noted that the conditions under which the network side device determines that the terminal needs to determine the HARQ process IDs corresponding to one or more PUSCHs in the specific duration may be found in the relevant conditions in the relevant technologies, and will not be repeated here.

Certainly, the network side device may also send the configuration information to the terminal when other conditions are met, which is not specifically limited in the embodiments of the present disclosure.

Sending, by the network side device, the configuration information to the terminal may be sending a DCI signaling to the terminal, where the DCI signaling includes the configuration information; or may be sending an RRC signaling to the terminal, where the RRC signaling includes the configuration information.

In some embodiments, the specific duration is at least one of: one CG period; multiple CG periods; multiple consecutive TOs; or a valid time window, where the valid time window is a time range indicated by dynamic indication information from the terminal.

In an embodiment of the present disclosure, the specific duration may be one CG period.

In an embodiment of the present disclosure, the specific duration may be multiple CG periods.

In an embodiment of the present disclosure, the specific duration may be multiple consecutive TOs.

In an embodiment of the present disclosure, the specific duration may be a valid time window, where the valid time window is a time range indicated by dynamic indication information from the terminal.

It may be understood that the terminal performs an uplink transmission in a valid TO and notifies the network side device of the usage of the TO via the dynamic indication information, and the notification may be based on UCI. There are two usage statuses which the terminal notifies: one is an "unused" status and the other is a "used" status. The terminal will not use the TO in the "unused" status, or the terminal will not use the TO in the "unused" status before the dynamic indication information is updated. The terminal may not use the TO in the "used" status.

The UCI may be new UCI or CG-UCI, carried by the CG PUSCH, and sent in any one or several TOs. The above-mentioned term "using the TO" means that the terminal performs a transmission on a PUSCH in the TO, and the term "not using the TO" means that the terminal does not perform a transmission on a PUSCH in the TO.

In an embodiment of the present disclosure, the time range indicated by the dynamic indication information from the terminal may be a time range constituted by the TOs used by the terminal reported by the terminal.

It should be noted that the above embodiments are not exhaustive, and are only illustrations of some embodiments. The above embodiments may be implemented individually or in combination. The above embodiments are only for illustration, but are not intended to be specific limitations on the scope of protection of the embodiments of the present disclosure.

The parameter information includes at least one of: an index of a TO, a group index of a TO, the number of TOs, a first offset corresponding to a TO, a second offset related to an HARQ process ID corresponding to a first PUSCH, or a reference HARQ process ID.

It should be understood that the specific duration may include one or more TOs, and the configurations of multiple TOs may be the same or different.

For example, the configurations of the multiple TOs are the same, the time slot lengths between any two TOs of the multiple TOs are the same, and the number and position of the symbols of the TOs in a time slot are the same.

For example, the configurations of multiple TOs are different, the time slot lengths between any two TOs of the multiple TOs are partially different or completely different, and/or the number of symbols occupied by TOs in the time slot is partially different or completely different, and/or the position of symbols occupied by TOs in the time slot is partially different or completely different, and so on.

In an embodiment of the present disclosure, the parameter information in the specific duration may include an index of a TO.

The specific duration may include one or more TOs. When there are multiple TOs, different TOs have different indexes.

For example, as shown in FIG. 3, when the specific duration is one CG period, the CG period includes 4 TOs. In chronological order, the index of the first TO may be 0, the index of the second TO may be 1, and so on.

In an embodiment of the present disclosure, the parameter information in the specific duration may include a group index of a TO.

The specific duration may include one or more TO groups, different TO groups have different group indexes, each TO group may include one or more TOs, and one or more TOs in the same TO group correspond to the same group index.

For example, the specific duration includes two TO groups, the first TO group includes TO#1 and TO#2, and the second TO group includes TO#3, where the group indexes of TO#1 and TO#2 may be 0, and the group index of TO#3 may be 1.

In an embodiment of the present disclosure, the parameter information in the specific duration may include the number of TOs in the specific duration.

In an embodiment of the present disclosure, the parameter information in the specific duration may include a first offset corresponding to a TO. The first offset corresponding to the TO may be related to the index of the TO.

For example, the first offset corresponding to the TO may be the index of the TO, or the first offset corresponding to the TO may be the index of the TO + 1, or the first offset corresponding to the TO may be set according to the granularity of the TO, or the like.

In an embodiment of the present disclosure, the parameter information in the specific duration may include a second offset related to the HARQ process ID corresponding to the first PUSCH. The second offset related to the HARQ process ID corresponding to the first PUSCH may be used by the terminal to determine the HARQ process ID corresponding to the first PUSCH. If the specific duration includes multiple TOs for transmitting multiple PUSCHs, the terminal may determine the HARQ process ID corresponding to the PUSCH after the first PUSCH according to a specific rule.

In an embodiment of the present disclosure, the parameter information in the specific duration may include a reference HARQ process ID. The reference HARQ process ID may be the largest HARQ process ID, the smallest HARQ process ID, an HARQ process ID corresponding to a PUSCH transmitted in a certain TO, or the like.

It should be noted that the above embodiments are not exhaustive, and are only illustrations of some embodiments. The above embodiments may be implemented individually or in combination. The above embodiments are only for illustration, but are not intended to be specific limitations on the scope of protection of the embodiments of the present disclosure.

In some embodiments, the configuration information includes first configuration information, where the first configuration information indicates the index of the TO in the specific duration; or second configuration information, where the second configuration information indicates the index of the first TO in the specific duration.

In an embodiment of the present disclosure, the network side device sends configuration information to the terminal, and the configuration information may include first configuration information, where the first configuration information indicates the index of the TO in the specific duration. Thus, the network side device may configure the index of the TO in the specific duration for the terminal via the first configuration information.

For example, the specific duration includes 2 TOs, and the first configuration information indicates the index of the TO in the specific duration, where the index of the first TO#1 is 1 and the index of the second TO#2 is 2.

In an embodiment of the present disclosure, the network side device sends configuration information to the terminal, and the configuration information may include second configuration information, where the second configuration information indicates the index of the first TO in the specific duration. Thus, the terminal may determine the index of the first TO in the specific duration according to the second configuration information, and the terminal may determine the index of the TO that follows the first TO in chronological order in an implicit manner.

For example, the specific duration includes 4 TOs. The terminal receives the second configuration information sent by the network side device and determines that the second configuration information indicates that the index of the first TO in the specific duration is 0, where the first TO may be the first TO#1 in the specific duration. Thus, the terminal may determine that in the specific duration, the index of the second TO#2 is 1, the index of the third TO#3 is 2, and the index of the fourth TO#4 is 3 according to the time sequence of TOs.

Alternatively, the first TO may be the second TO#1 in the specific duration. Thus, the terminal may determine that in the specific duration, the index of the third TO#3 is 1 and the index of the fourth TO#4 is 2 according to the time sequence of TOs.

It should be noted that the above examples are for illustration only, but are not intended to be specific limitations on the embodiments of the present disclosure. The number of TOs in the specific duration may also be 2/3/5 or more than 5, and the index of the first TO in the specific duration may also be any other value.

In this embodiment or example, unless there is any contradiction, individual steps may be independent, arbitrarily combined or exchanged in order, and the optional implementations or optional examples may be arbitrarily combined and may be arbitrarily combined with other implementations or examples.

By implementing the embodiments of the present disclosure, a network side device sends configuration information to a terminal, where the configuration information is used by the terminal to determine parameter information in a specific duration, and the parameter information includes at least one of: an index of a TO, a group index of a TO, the number of TOs, a first offset corresponding to a TO, a second offset related to an HARQ process ID corresponding to a first PUSCH, or a reference HARQ process ID. Therefore, the terminal may determine the HARQ process ID corresponding to the PUSCH in the specific duration, and may determine that different PUSCHs correspond to different HARQ process IDs, which is beneficial to the scheduling flexibility.

To facilitate the understanding of the embodiments of the present disclosure, the following illustrative embodiments are provided.

In an illustrative embodiment, for configured uplink grants neither configured with harq-ProcID-Offset2 nor with cg-RetransmissionTimer, the HARQ Process ID associated with the first symbol of an UL transmission is derived from the following equation:

HARQ Process ID = [floor(CURRENT_symbol/periodicity)] modulo nrofHARQ-Processes.

For configured uplink grants with harq-ProcID-Offset2, the HARQ Process ID associated with the first symbol of an UL transmission is derived from the following equation:

HARQ Process ID = [floor(CURRENT_symbol / periodicity)] modulo nrofHARQ-Processes + harq-ProcID-Offset2,

where CURRENT_symbol = (SFN × numberOfSlotsPerFrame × numberOfSymbolsPerSlot + slot number in the frame × numberOfSymbolsPerSlot + symbol number in the slot), and numberOfSlotsPerFrame and numberOfSymbolsPerSlot refer to the number of consecutive slots per frame and the number of consecutive symbols per slot, respectively as specified in TS 38.211 [8].

For configured uplink grants configured with cg-RetransmissionTimer, the UE implementation selects an HARQ Process ID among the HARQ process IDs available for the configured grant configuration.

If the MAC entity is configured with intraCG-Prioritization, for HARQ Process ID selection, the UE shall prioritize the HARQ Process ID with the highest priority, where the priority of HARQ process is determined by the highest priority among priorities of the logical channels that are multiplexed (i.e. the MAC PDU to transmit is already stored in the HARQ buffer) or have data available that can be multiplexed (i.e. the MAC PDU to transmit is not stored in the HARQ buffer) in the MAC PDU, according to the mapping restrictions as described in clause 5.4.3.1.2.

If the MAC entity is configured with intraCG-Prioritization, for HARQ Process ID selection among initial transmission and retransmission with equal priority, the UE shall prioritize retransmissions before initial transmissions. The priority of an HARQ Process for which no data for logical channels is multiplexed or can be multiplexed in the MAC PDU is lower than the priority of an HARQ Process for which data for any logical channels is multiplexed or can be multiplexed in the MAC PDU. If the MAC entity is not configured with intraCG-Prioritization, for HARQ Process ID selection, the UE shall prioritize retransmissions before initial transmissions. The UE shall toggle the NDI in the CG-UCI for new transmissions and not toggle the NDI in the CG-UCI in retransmissions.

In the related art, only one CG PUSCH TO is allowed to be configured in one CG configuration or one CG period, and the HARQ Process ID (HP ID) of the CG PUSCH TO is confirmed by the above formula.

In the related art, for determination of HARQ process IDs associated to PUSCHs in multi-PUSCHs CG assuming one TB per PUSCH, consider the following alternatives:

In some embodiments, Alternative (Alt.) 1: the HARQ process ID for the first configured/valid PUSCH in a period is determined based on the legacy CG procedure when cg-RetransmissionTimer is not configured, and applying "the period duration divided by X instead of the period duration.

The HARQ process ID of the remaining PUSCHs in the period is determined by incrementing the HARQ process ID of the preceding PUSCH in the period.

In some embodiments, Alt. 1-1: X=1.

In some embodiments, Alt. 1-2: X is the number of configured PUSCHs in a period.

In some embodiments, Alt. 1-3: X is provided by RRC configuration.

Detailed information for further study (FFS).

In some embodiments, Alt. 2: support that UE can decide, as in NR-U, the HARQ IDs for the multiple CG PUSCH transmission occasions and indicate the decided HARQ IDs to gNB if multiple HARQ processes are used for the multiple CG PUSCH transmission occasions in a period of a single CG PUSCH configuration.

In some embodiments, Alt. 3: the HARQ process ID for the configured PUSCHs in a period is determined based on the legacy CG procedure when cg-RetransmissionTimer is not configured.

FFS on potential enhancements different from previous alternatives

In some embodiments, Alt. 3-1: note: same HP ID would be used for all PUSCHs within a period.

In some embodiments, Alt. 3-2: note: different HP ID could be used for all PUSCHs within a period.

In some embodiments, Alt. 4: the HARQ process ID for the first configured/valid PUSCH in a period is determined based on the legacy CG procedure when cg-RetransmissionTimer is not configured.

The HARQ process ID of the remaining PUSCHs in the period is determined by incrementing the HARQ process ID of the preceding PUSCH in the period.

FFS on potential enhancements different from previous alternatives

In some embodiments, Alt. 5: support that UE can decide, as in NR-U, the HARQ IDs for the first CG PUSCH transmission occasions and indicate the decided HARQ IDs to gNB if multiple HARQ processes are used for the multiple CG PUSCH transmission occasions in a period of a single CG PUSCH configuration.

The HARQ process ID of the remaining PUSCHs in the period is determined by incrementing the HARQ process ID of the preceding PUSCH in the period.

In some embodiments, Alt. 6: FFS other solutions.

Note: the case of one TB map to multiple PUSCHs is not considered here.

The above agreement was reached during the RAN1 112 meeting. The main idea of Alt. 1 is to reuse the existing formula and allocate different/same HPIDs (HARQ process IDs) to different TOs by modifying the divided "period" parameter. The main idea of Alt. 2 is that the terminal determines the HPID. How to notify the network side device remains to be discussed. The main idea of Alt. 3 is similar to that of Alt. 1, except that Alt. 3 targets all CG PUSCHs, while Alt. 1 targets the first PUSCH/valid PUSCH. The main idea of Alt. 4 is similar to that of Alt. 1, and predefined rules are used for other PUSCHs. The main idea of Alt. 5 is similar to that of Alt. 2. The terminal determines the HPID for the first PUSCH/valid PUSCH, and uses predefined rules to determine HPIDs for other PUSCHs.

In an embodiment of the present disclosure, the problem 1 to be solved is how to configure/determine HP IDs for different PUSCHs? (Example 1)

Corresponding different HP IDs to different PUSCHs is beneficial to the scheduling flexibility. Similarly, the same HP ID may be reused for multiple PUSCHs. Although this will impose certain restrictions on scheduling, it may effectively save HP ID resources. Based on the Alt. 1 option above, when the parameter "X" is equal to 1, it is actually exactly the same as the existing mechanism. When "X" is configured with other values, it cannot be guaranteed that the HP IDs in PUSCHs are different, unless a different X is configured for each TO/PUSCH.

A simple approach to solving the above problem is to introduce the index of the TO in CG to determine the HP ID. When only one PUSCH may be transmitted in one TO, this solution may ensure that the HP IDs of all PUSCHs are different. When $N$ PUSCHs may be transmitted in one TO, the HP IDs of the PUSCHs within one TO are the same.

A simple approach to solving the above problem is to introduce a reference HP ID (the maximum/minimum HP ID within a period), and then perform calculations based on the reference HP ID according to the default rule for confirmation.

A simple approach to solving the above problem is to introduce harq-ProcID-Offset3. harq-ProcID-Offset3 is confirmed according to a certain calculation rule, and the calculation rule may be related to the index of the TO in CG.

In an embodiment of the present disclosure, the second problem solved is how to confirm the object to which the HP ID is bound? (Example 2)

The network side device configures multiple TOs for the terminal within a CG period. The terminal is likely to need multiple spare TOs. The CG PUSCHs of these TOs are not actually sent, so binding the HP ID may be skipped. This issue requires higher-level protection, and the actual details may be resolved when solving problem 1.

In an embodiment of the present disclosure, the problem 3 to be solved is how to configure the same HP ID for multiple PUSCHs? (Example 3)

In the previous discussion, it is confirmed that the same HP ID may be reused for multiple PUSCHs. Although this will impose certain restrictions on scheduling, it may effectively save HP ID resources. One implementation approach is to group TOs, and the PUSCHs in a group correspond to the same HP ID.

Example 1

In an implementation, a network side device (base station) configures at least one set of CG resources for a terminal on a BWP via an RRC signaling. The terminal may perform an uplink transmission in a TO in all CG configurations by itself within a CG period configured by the network side device. In another implementation, the network side device configures partial information of at least one set of CG configurations for the terminal on a BWP via an RRC signaling, and the network side device notifies the terminal of the remaining information of the CG configuration via dynamic signaling DCI. After the network side device activates the CG configuration via dynamic signaling DCI, the terminal may perform an uplink transmission in the TO in the CG configuration by itself within the CG period configured by the network side device.

The terminal performs an uplink transmission in a valid TO and notifies the network side device of the usage of the TO via dynamic indication information, and the notification is based on UCI. There are two usage statuses: one is an "unused" status and the other is a "used" status. The terminal will not use the TO in the "unused" status, or the terminal will not use the TO in the "unused" status before the dynamic indication information is updated. The terminal may not use the TO in the "used" status. The UCI may be new UCI or CG-UCI, carried by the CG PUSCH, and sent in any one or several TOs. The above-mentioned term "using the TO" means that the terminal performs a transmission on a PUSCH in the TO, and the term "not using the TO" means that the terminal does not perform a transmission on a PUSCH in the TO.

Based on the above, when each PUSCH carries a TB, the HARQ process ID corresponding to the PUSCH is determined in at least one of the following ways.

Solution 1: Introducing an index of a TO (IndexOfTO) in a first duration.

In an embodiment, the index of the TO in the first duration is predefined in a protocol. For example, it is predefined in a protocol that in chronological order within a CG period, the index of the first TO is 0, the index of the second TO is 1, and so on, as specifically shown in FIG. 3.

In an embodiment, the network side device configures the index of the TO in the first duration. The index is explicitly configured for each TO by the network side device via a first RRC parameter. For example, the network side device configures that in chronological order within a CG period, the index of the third TO is 0, and the index of the fourth TO is 1, as shown in FIG. 6.

In an embodiment, the network side device does not configure the index of the TO for the terminal, then in chronological order in the first duration, the index of the first TO is 0, the index of the second TO is 1, and so on, as shown in FIG. 7.

In the above embodiment, the first duration is preferably one CG period. Similarly, the first duration may also be multiple CG periods, or a portion of a CG period, or multiple consecutive TOs. In addition, the first duration may also be a valid time window, and the valid time window is a time region indicated by the dynamic indication information.

Based on the above, it is determined that the information for the HARQ process ID includes the index of the TO (IndexOfTO) in the first duration, and the HARQ process ID is determined by calculation using a formula including the IndexOfTO.

In an embodiment, the HARQ process ID for the PUSCH is confirmed by the IndexOfTO and the like, and the following formula is used as an implementation:

HARQ Process ID = [floor(CURRENT_symbol/periodicity/ IndexOfTO)] modulo nrofHARQ-Processes; or HARQ Process ID = [floor(CURRENT_symbol/periodicity * IndexOfTO)] modulo nrofHARQ-Processes; or HARQ Process ID = [floor(CURRENT_symbol / periodicity / IndexOfTO)] modulo nrofHARQ-Processes + harq-ProcID-Offset2; or HARQ Process ID = [floor(CURRENT_symbol / periodicity * IndexOfTO)] modulo nrofHARQ-Processes + harq-ProcID-Offset2.

The above *floor* is a rounding-down operation; *modulo* is a modulo operation; *CURRENT_symbol* is a current symbol, which is determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Solution 2: Introducing the number *N* of TOs in a first duration.

In an embodiment, the number *N* of TOs in the first duration is predefined in a protocol. The number *N* is explicitly configured by the network side device via a first RRC parameter. The first duration is preferably one CG period. Similarly, the first duration may also be multiple CG periods, or a portion of a CG period, or multiple consecutive TOs. In addition, the first duration may also be a valid time window, and the valid time window is a time region indicated by the dynamic indication information.

Based on the above, it is determined that information for an HARQ process ID includes the number *N* of TOs in the first duration, and the HARQ process ID is determined by calculation using a formula including *N*.

The following formula is used as an implementation:

HARQ Process ID = [floor(CURRENT_symbol/periodicity/ N)] modulo nrofHARQ-Processes; or HARQ Process ID = [floor(CURRENT_symbol/periodicity * N)] modulo nrofHARQ-Processes; or HARQ Process ID = [floor(CURRENT_symbol / periodicity / N)] modulo nrofHARQ-Processes + harq-ProcID-Offset2; or HARQ Process ID = [floor(CURRENT_symbol / periodicity * N)] modulo nrofHARQ-Processes + harq-ProcID-Offset2; or HARQ Process ID = [floor(CURRENT_symbol/periodicity/ N*2)] modulo nrofHARQ-Processes; or HARQ Process ID = [floor(CURRENT_symbol/periodicity * N/2)] modulo nrofHARQ-Processes; or HARQ Process ID = [floor(CURRENT_symbol / periodicity / N*2)] modulo nrofHARQ-Processes + harq-ProcID-Offset2; or HARQ Process ID = [floor(CURRENT_symbol / periodicity * N/2)] modulo nrofHARQ-Processes + harq-ProcID-Offset2.

The above *floor* is a rounding-down operation; *modulo* is a modulo operation; *CURRENT_symbol* is a current symbol, which is determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Solution 3: Introducing harq-ProcID-Offset3.

Based on the above, it is determined that information for an HARQ process ID includes a first HP ID offset harq-ProcID-Offset3, and the HARQ process ID is determined by calculation using a formula including the harq-ProcID-Offset3.

In an embodiment, the HARQ process ID for the PUSCH is confirmed by the harq-ProcID-Offset3, and the like. The following formula is used as an implementation:

HARQ Process ID = [floor(CURRENT_symbol/periodicity)] modulo nrofHARQ-Processes + harq-ProcID-Offset3; or HARQ Process ID = [floor(CURRENT_symbol/periodicity)] modulo nrofHARQ-Processes + harq-ProcID-Offset3; or HARQ Process ID = [floor(CURRENT_symbol / periodicity)] modulo nrofHARQ-Processes + harq-ProcID-Offset2 + harq-ProcID-Offset3; or HARQ Process ID = [floor(CURRENT_symbol / periodicity)] modulo nrofHARQ-Processes + harq-ProcID-Offset2 + harq-ProcID-Offset3.

The above *floor* is a rounding-down operation; *modulo* is a modulo operation; *CURRENT_symbol* is a current symbol, which is determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Further, the first HP ID offset harq-ProcID-Offset3 is determined by the index of the TO (IndexOfTO) in the first duration, for example, the harq-ProcID-Offset3 is equal to the index of the TO (IndexOfTO) in the first duration, or the harq-ProcID-Offset3 is equal to the IndexOfTO + 1. Alternatively, the first HP ID offset harq-ProcID-Offset3 is configured by the network side device via an RRC signaling, and the configuration granularity may be to configure a first HP ID offset for each TO, or to configure a first HP ID offset for multiple TOs, or to configure a first HP ID offset within a CG period.

Solution 4: Introducing harq-ProcID-Offset4

Based on the above, it is determined that information for an HP ID for a first PUSCH in a first duration includes a second HP ID offset harq-ProcID-Offset4, the HARQ process ID is determined by calculation using a formula including the harq-ProcID-Offset4, and the other PUSCHs in the first duration are gradually incremented by 1 in chronological order of PUSCHs, or gradually incremented by 1 in chronological order of TOs.

As shown in FIG. 12, an initial HP ID calculated according to the harq-ProcID-Offset4 is *n*, and the first duration is one CG period, then a PUSCH in TO0 is the first PUSCH, and the HP ID for the first PUSCH is *n*. The HP ID corresponding to the second PUSCH is *n* + 1. The HP ID corresponding to the third PUSCH is *n* + 2. The HP IDs are gradually incremented by 1 according to the time sequence of PUSCHs.

As shown in FIG. 13, an initial HP ID calculated according to the harq-ProcID-Offset4 is *n*, and the first duration is one CG period, then a PUSCH in TO0 is the first PUSCH, and the HP ID for the first PUSCH is *n*. The HP ID corresponding to the second PUSCH is *n* + 1. The HP ID corresponding to the third PUSCH is *n* + 3. The HP IDs are gradually incremented by 1 according to the time sequence of TOs.

In an embodiment, the HARQ process ID for the first PUSCH in the first duration is confirmed by the harq-ProcID-Offset4, and the like. The following formula is used as an implementation:

HARQ Process ID = [floor(CURRENT_symbol/periodicity)] modulo nrofHARQ-Processes + harq-ProcID-Offset4; or HARQ Process ID = [floor(CURRENT_symbol/periodicity)] modulo nrofHARQ-Processes + harq-ProcID-Offset4; or HARQ Process ID = [floor(CURRENT_symbol / periodicity)] modulo nrofHARQ-Processes + harq-ProcID-Offset2 + harq-ProcID-Offset4; or HARQ Process ID = [floor(CURRENT_symbol / periodicity)] modulo nrofHARQ-Processes + harq-ProcID-Offset2 + harq-ProcID-Offset4.

The above *floor* is a rounding-down operation; *modulo* is a modulo operation; *CURRENT_symbol* is a current symbol, which is determined from parameters such as a radio frame number, a starting symbol of the PUSCH in a time slot, the number of time slots in a radio frame, and the number of time domain symbols in the time slot; *periodicity* is a period with CG configuration; *nrofHARQ-Processes* is the total number of the configured HP IDs; and *harq-ProcID-Offset2* is an HP ID offset for CG configuration without repetition timing.

Furthermore, the second HP ID offset harq-ProcID-Offset4 is configured by the network side device via the first RRC signaling. In addition, when the harq-ProcID-Offset4 is not configured, the default value is 0 or *N*. *N* is the number of TOs configured in one CG period.

Solution 5: Introducing a reference HP ID in a first duration----*M*.

A reference HP ID is introduced, and the reference HP ID may be a maximum HP ID applied to a PUSCH in the first duration, or a minimum HP ID applied to a PUSCH in the first duration. The first duration is preferably one CG period. Similarly, the first duration may also be multiple CG periods, or a portion of a CG period, or multiple consecutive TOs. In addition, the first duration may also be a valid time window, and the valid time window is a time region indicated by dynamic indication information.

In an implementation, the reference HP ID is the maximum HP ID applied to the PUSCH in the first duration. The terminal correspond $M - (N - 1)$ to $M$ to all PUSCHs in the first duration based on the implementation of the terminal. *N* is the number of TOs in the first duration.

In another implementation, the reference HP ID is the minimum HP ID applied to the PUSCH in the first duration. The terminal correspond $M$ to $M + N - 1$ to all PUSCHs in the first duration based on the implementation of the terminal. *N* is the number of TOs in the first duration.

Example 2, in the above Example 1, there are two understandings of the PUSCH corresponding to the HP ID.

1) The network side device configures the CG PUSCH for the terminal.
2) The network side device configures the CG PUSCH for the terminal and the terminal actually sends the CG PUSCH.

When it corresponds to the first understanding, each TO configured by the network side device needs to correspond to the HP ID. When it corresponds to the second understanding, the HP ID may only correspond to the TO in which the PUSCH is transmitted.

Example 3, a TO grouping method, where PUSCHs in the same TO group correspond to the same HP ID.

The grouping method is as follows: the network side device configures the TO grouping via an RRC signaling.

In an implementation, a group G is configured, where G is not greater than *N*. *N* is the number of TOs in the first duration. For example, if $N = 7$ and $G = 3$, then TO0 and TO1 are a group, TO2 and TO3 are a group, and TO4, TO5, and TO6 are a group, and HP IDs in the same group are the same.

In another implementation, associated TOs are configured via an RRC signaling, and HP IDs corresponding to PUSCHs in the associated TOs are the same. For example, if {TO0, TO2} are configured via the RRC signaling, then CG PUSCHs transmitted in TO0 and TO2 correspond to the same HP ID.

In this embodiment or example, unless there is any contradiction, individual steps may be independent, arbitrarily combined or exchanged in order, and the optional implementations or optional examples may be arbitrarily combined and may be arbitrarily combined with other implementations or examples.

The relevant description of the method in the above illustrative embodiments has been described in detail in the embodiments shown in FIGS. 2 to 15. For details, reference is made to the relevant description of the embodiments in FIGS. 2 to 15, which will not be repeated here.

In the above embodiments provided in the present disclosure, the methods provided in the embodiments of the present disclosure are introduced from the perspectives of the terminal and the network side device, respectively.

Reference is made to FIG. 16, which is a schematic block diagram of a communication device 1 provided in an embodiment of the present disclosure. The communication device 1 shown in FIG. 16 may include a transceiver module 11 and a processing module. The transceiver module may include a sending module and/or a receiving module. The sending module is configured to implement the sending function, and the receiving module is configured to implement the receiving function. The transceiver module may implement the sending function and/or the receiving function.

The communication device 1 may be a terminal, an apparatus in a terminal, or a device that may be used in conjunction with a terminal. Alternatively, the communication device 1 may be a network side device, an apparatus in a network side device, or a device that may be used in conjunction with a network side device.

The communication device 1 is configured on the terminal side.

The communication device 1 includes a processing module 12.

The processing module 12 is configured to determine parameter information in a specific duration.

The processing module 12 is further configured to determine, according to the parameter information, an HARQ process ID corresponding to a PUSCH in the specific duration.

The parameter information includes at least one of: an index of a TO, a group index of a TO, the number of TOs, a first offset corresponding to a TO, a second offset related to an HARQ process ID corresponding to a first PUSCH, or a reference HARQ process ID.

In some embodiments, the specific duration is at least one of: one CG period; multiple CG periods; multiple consecutive TOs; or a valid time window, where the valid time window is a time range indicated by dynamic indication information from the terminal.

In some embodiments, the PUSCHs in the TOs with the same group index correspond to the same HARQ process ID.

In some embodiments, the PUSCH is a first CG PUSCH determined by the terminal according to a transmission configuration sent by a network side device; or the PUSCH is a second CG PUSCH determined and sent by the terminal according to a transmission configuration sent by a network side device.

In some embodiments, the processing module 12 is further configured to determine the parameter information in the specific duration according to a protocol agreement; or in some embodiments, the communication device 1 further includes a transceiver module 11.

The transceiver module 11 is configured to receive configuration information sent by a network side device, and determine the parameter information in the specific duration according to the configuration information.

In some embodiments, the index of the TO is specified by a protocol, or it is specified by a protocol that an index of a $k^{th}$ TO in the specific duration is $a + (k\text{-}1) \times b$, where $a$ and $b$ are both integers, $1 \leq k \leq K$, $k$ is an integer, and $K$ is the number of TOs in the specific duration.

In some embodiments, the parameter information includes the index of the TO, and the configuration information includes: first configuration information, where the first configuration information indicates the index of the TO in the specific duration; or second configuration information, where the second configuration information indicates an index of a first TO in the specific duration.

In some embodiments, the processing module 12 is further configured to calculate the HARQ process ID corresponding to the PUSCH in the specific duration according to a calculation formula including the parameter information.

In some embodiments, the processing module 12 is further configured to determine the HARQ process ID corresponding to the first PUSCH according to the second offset related to the HARQ process ID corresponding to the first PUSCH and a calculation formula with the second offset related to the HARQ process ID corresponding to the first PUSCH; and determine that the HARQ process ID corresponding to an $s^{th}$ PUSCH in the specific duration is the HARQ process ID corresponding to the first PUSCH + (s-1) $\times$ a specific value, where $1 \leq s \leq S$, $s$ is an integer, $S$ is the number of TOs in the specific duration, and the specific value is an integer.

In some embodiments, the processing module 12 is further configured to: in a case where the reference HARQ process ID is $M$, then determine, according to the reference HARQ process ID, that the HARQ process ID corresponding to an $n^{th}$ PUSCH in the specific duration is $M - (n - 1)$, where $1 \leq n \leq N$, $N$ is the number of TOs in the specific duration, the reference HARQ process ID is a maximum HARQ process ID applied to the PUSCH in the specific duration, and $M \geq N$; or in a case where the reference HARQ process ID is $M$, then determine, according to the reference HARQ process ID, that the HARQ process ID corresponding to an $n^{th}$ PUSCH in the specific duration is $M + n - 1$, where $1 \leq n \leq N$, $N$ is the number of TOs in the specific duration, the reference HARQ process ID is a minimum HARQ process ID applied to the PUSCH in the specific duration, and $M$ is an integer.

The communication device 1 is configured on the network side device side.

The communication device 1 includes a transceiver module 11.

The transceiver module 11 is configured to send configuration information to a terminal, where the configuration information is used by the terminal to determine parameter information in a specific duration.

In some embodiments, the parameter information includes at least one of: an index of a TO, a group index of a TO, the number of TOs, a first offset corresponding to a TO, a second offset related to an HARQ process ID corresponding to a first PUSCH, or a reference HARQ process ID.

In some embodiments, the specific duration is at least one of: one CG period; multiple CG periods; multiple consecutive TOs; or a valid time window, where the valid time window is a time range indicated by dynamic indication information from the terminal.

Regarding the communication device 1 in the above embodiments, the specific manners for performing operations for individual modules therein have been described in detail in the embodiments regarding the methods, which will not be elaborated herein.

The communication device 1 provided in the above embodiments of the present disclosure achieves the same or similar beneficial effects as the method for determining the hybrid automatic repeat request process identifier provided in some of the above embodiments, which will not be described in detail here.

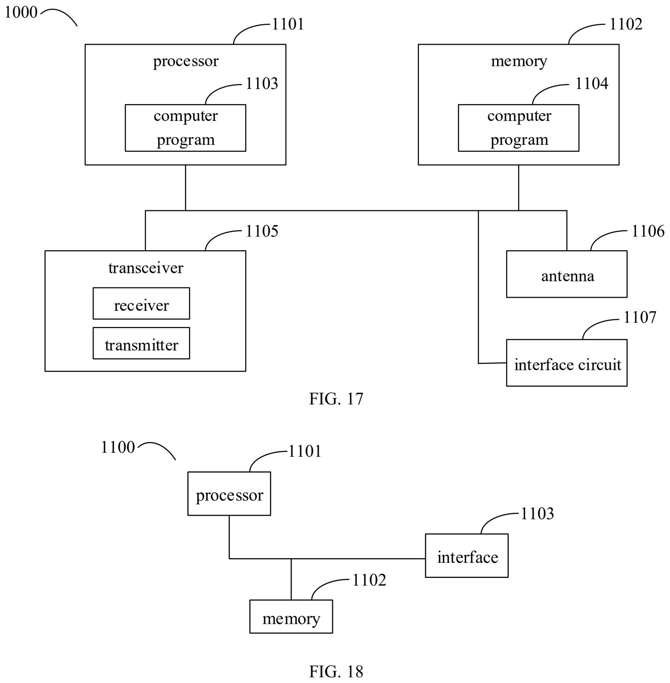

Reference is made to FIG. 17, which is a schematic block diagram of another communication device 1000 provided in an embodiment of the present disclosure. The communication device 1000 may be a terminal or a network side device, or may be a chip, a chip system, a processor or the like supporting a terminal or a network side device to implement the above-mentioned methods. The communication device 1000 may be configured to implement the methods as described in the above-mentioned method embodiments. For details, reference may be made to the description in the above-mentioned method embodiments.

The communication device 1000 may include one or more processors 1001. The processor 1001 may be a general-purpose processor, a special-purpose processor, or the like. The processor 1001 may be, for example, a baseband processor or a central processor. The baseband processor may be configured to process a communication protocol and communication data, and the central processor may be configured to control a communication device (such as a network side device, a baseband chip, a terminal, a terminal chip, a DU, a CU, or the like), execute a computer program, and process data of the computer program.

Optionally, the communication device 1000 may further include one or more memories 1002 on which a computer program 1004 may be stored, and the processor 1001 is configured to execute the computer program 1004 to cause the communication device 1000 to perform the methods as described in the above-mentioned method embodiments. Optionally, the memory 1002 may also have data stored therein. The communication device 1000 and the memory 1002 may be provided independently or integrated together.

Optionally, the communication device 1000 may further include a transceiver 1005 and an antenna 1006. The transceiver 1005 may be referred to as a transceiving unit, a transceiving device, a transceiving circuit or the like for implementing a transceiving function. The transceiver 1005 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 1000 may further include one or more interface circuits 1007. The interface circuit 1007 is configured to receive and transmit code instructions to the processor 1001. The processor 1001 is configured to run the code instructions to enable the communication device 1000 to perform the methods described in the above-mentioned method embodiments.

The communication device 1000 is a terminal, the processor 1001 is configured to execute steps S21 and S22 in FIG. 2; steps S41 and S42 in FIG. 4; steps S51 and S52 in FIG. 5; steps S81 and S82 in FIG. 8; steps S91 and S92 in FIG. 9; steps S101 and S102 in FIG. 10; steps S111, S112 and S113 in FIG. 11; steps S141 and S142 in FIG. 14; and the transceiver 1005 is configured to execute step S41 in FIG. 4.

The communication device 1000 is a network side device, and the transceiver 1005 is configured to execute step S151 in FIG. 15.

In an implementation, the processor 1001 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1001 may have stored therein the computer program 1003 that, when running on the processor 1001, enables the communication device 1000 to perform the methods described in the above-mentioned method embodiments. The computer program 1003 may be embedded in the processor 1001, in which case the processor 1001 may be implemented by hardware.

In an implementation, the communication device 1000 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, or the like. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), or the like.

The communication device described in the above embodiments may be a terminal or a network side device, but the scope of the communication device described in the present disclosure is not limited thereto. The structure of the communication device may not be limited by

FIG. 17. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network side device, a cloud device, an artificial intelligence device, or the like; or (6) others.

For the case where the communication device may be a chip or a chip system, reference is made to FIG. 18, which is a schematic block diagram of a chip provided in an embodiment of the present disclosure.

The chip 1100 includes a processor 1101 and an interface 1103. The number of the processors 1101 may be one or more, and the number of the interfaces 1103 may be multiple.

For the case where the chip is configured to implement the functions of the terminal in the embodiments of the present disclosure, the following applies.

The interface 1103 is configured to receive code instructions and transmit the code instructions to the processor.

The processor 1101 is configured to run the code instructions to execute the method for determining the hybrid automatic repeat request process identifier as described in some of the above embodiments.

For the case where the chip is configured to implement the functions of the network side device in the embodiments of the present disclosure, the following applies.

The interface 1103 is used to receive code instructions and transmit the code instructions to the processor.

The processor 1101 is configured to run the code instructions to execute the method for determining the hybrid automatic repeat request process identifier as described in some of the above embodiments.

Optionally, the chip 1100 further includes a memory 1102 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

An embodiment of the present disclosure further provides a system for determining a hybrid automatic repeat request process identifier, which includes the communication device in the above embodiment of FIG. 16 as a terminal and the communication device in the above embodiment of FIG. 16 as a network side device, or includes the communication device in the above embodiment of FIG. 17 as a terminal and the communication device in the above embodiment of FIG. 17 as a network side device.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", and the like, and these technical features described with the terms "first", "second", "third", "A", "B", "C" and "D" have no order of precedence or size.

As used herein, the term "if" or "in a case where" may be construed to mean "when" or "upon" or "in response to determining" depending on the context.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

### Claims

1. A method for determining a hybrid automatic repeat request process identifier, performed by a terminal and comprising:

   determining parameter information in a specific duration; and
   determining, according to the parameter information, a hybrid automatic repeat request (HARQ) process identifier (ID) corresponding to a physical uplink shared channel (PUSCH) in the specific duration,
   wherein the parameter information comprises at least one of:

   an index of a transmission occasion (TO);
   a group index of a TO;
   a numeric count of TOs;
   a first offset corresponding to a TO;
   a second offset related to an HARQ process ID corresponding to a first PUSCH; or
   a reference HARQ process ID.

2. The method according to claim 1, wherein the specific duration is at least one of:

   one configured grant (CG) period;
   multiple CG periods;
   multiple consecutive TOs; or
   a valid time window, wherein the valid time window is a time range indicated by dynamic indication information from the terminal.

3. The method according to claim 1 or 2, wherein the PUSCHs in the TOs with a same group index correspond to a same HARQ process ID.

4. The method according to any one of claims 1 to 3, wherein the PUSCH is a first CG PUSCH determined by the terminal according to a transmission configuration sent by a network side device; or
   the PUSCH is a second CG PUSCH determined and sent by the terminal according to a transmission configuration sent by a network side device.

5. The method according to any one of claims 1 to 4, wherein determining the parameter information in the specific duration comprises:

determining the parameter information in the specific duration according to a protocol agreement; or
receiving configuration information sent by a network side device, and determining the parameter information in the specific duration according to the configuration information.

6. The method according to claim 5, wherein the index of the TO is specified by a protocol, or it is specified by a protocol that an index of a $k^{th}$ TO in the specific duration is $a + (k-1) \times b$, where $a$ and $b$ are both integers, $1 \leq k \leq K$, $k$ is an integer, and $K$ is the numeric count of TOs in the specific duration.

7. The method according to claim 5, wherein the parameter information comprises the index of the TO, and the configuration information comprises:

first configuration information, wherein the first configuration information indicates the index of the TO in the specific duration; or
second configuration information, wherein the second configuration information indicates an index of a first TO in the specific duration.

8. The method according to any one of claims 1 to 7, wherein determining, according to the parameter information, the HARQ process ID corresponding to the PUSCH in the specific duration comprises:
calculating the HARQ process ID corresponding to the PUSCH in the specific duration according to a calculation formula comprising the parameter information.

9. The method according to claim 8, wherein calculating the HARQ process ID corresponding to the PUSCH in the specific duration according to the parameter information and the calculation formula comprising the parameter information comprises:

determining the HARQ process ID corresponding to the first PUSCH according to the second offset related to the HARQ process ID corresponding to the first PUSCH and a calculation formula with the second offset related to the HARQ process ID corresponding to the first PUSCH;
determining that the HARQ process ID corresponding to an $s^{th}$ PUSCH in the specific duration is the HARQ process ID corresponding to the first PUSCH + $(s-1) \times$ a specific value, wherein $1 \leq s \leq S$, $s$ is an integer, $S$ is the numeric count of TOs in the specific duration, and the specific value is an integer.

10. The method according to any one of claims 1 to 7, wherein calculating the HARQ process ID corresponding to the PUSCH in the specific duration according to the parameter information comprises:

in a case where the reference HARQ process ID is $M$, then determining, according to the reference HARQ process ID, that the HARQ process ID corresponding to an $n^{th}$ PUSCH in the specific duration is $M - (n - 1)$, wherein $1 \leq n \leq N$, $N$ is the numeric count of TOs in the specific duration, the reference HARQ process ID is a maximum HARQ process ID applied to the PUSCH in the specific duration, and $M \geq N$; or
in a case where the reference HARQ process ID is $M$, then determining, according to the reference HARQ process ID, that the HARQ process ID corresponding to an $n^{th}$ PUSCH in the specific duration is $M + n - 1$, wherein $1 \leq n \leq N$, $N$ is the numeric count of TOs in the specific duration, the reference HARQ process ID is a minimum HARQ process ID applied to the PUSCH in the specific duration, and $M$ is an integer.

11. A method for determining a hybrid automatic repeat request process identifier, performed by a network side device and comprising:

sending configuration information to a terminal, wherein the configuration information is used by the terminal to determine parameter information in a specific duration,
wherein the parameter information comprises at least one of:

an index of a transmission occasion (TO);
a group index of a TO;
a numeric count of TOs;
a first offset corresponding to a TO;

a second offset related to an HARQ process ID corresponding to a first PUSCH; or
a reference HARQ process ID.

12. The method according to claim 11, wherein the specific duration is at least one of:

one configured grant (CG) period;
multiple CG periods;
multiple consecutive TOs; or
a valid time window, wherein the valid time window is a time range indicated by dynamic indication information from the terminal.

13. The method according to claim 11 or 12, wherein the parameter information comprises the index of the TO, and the configuration information comprises:

first configuration information, wherein the first configuration information indicates the index of the TO in the specific duration; or
second configuration information, wherein the second configuration information indicates an index of a first TO in the specific duration.

14. A communication device, comprising:

a processing module configured to determine parameter information in a specific duration,
wherein the processing module is further configured to determine, according to the parameter information, a hybrid automatic repeat request (HARQ) process identifier (ID) corresponding to a physical uplink shared channel (PUSCH) in the specific duration,
wherein the parameter information comprises at least one of:

an index of a transmission occasion (TO);
a group index of a TO;
a numeric count of TOs;
a first offset corresponding to a TO;
a second offset related to an HARQ process ID corresponding to a first PUSCH; or
a reference HARQ process ID.

15. A communication device, comprising:

a transceiver module configured to send configuration information to a terminal, wherein the configuration information is used by the terminal to determine parameter information in a specific duration,
wherein the parameter information comprises at least one of:

an index of a transmission occasion (TO);
a group index of a TO;
a numeric count of TOs;
a first offset corresponding to a TO;
a second offset related to an HARQ process ID corresponding to a first PUSCH; or
a reference HARQ process ID.

16. A communication device, comprising:

a processor; and
a memory having stored therein a computer program,
wherein the processor executes the computer program stored in the memory to cause the communication device to perform the method according to any one of claims 1 to 10 or any one of claims 11 to 13.

17. A communication device, comprising:

a processor; and
an interface circuit configured to receive code instructions and transmit the code instructions to the processor,

wherein the processor is configured to run the code instructions to cause the method according to any one of claims 1 to 10 or any one of claims 11 to 13 to be implemented.

18. A computer-readable storage medium for storing instructions that, when executed, cause the method according to any one of claims 1 to 10 or any one of claims 11 to 13 to be implemented.

FIG. 1

| determining parameter information in a specific duration | S21 |
| --- | --- |

| determining, according to the parameter information, an HARQ process ID corresponding to a PUSCH in the specific duration | S22 |

FIG. 2

TO index=0    TO index=1    TO index=2    TO index=3

CG period

FIG. 3

| determining parameter information in a specific duration according to a protocol agreement; or receiving configuration information sent by a network side device, and determining parameter information in a specific duration according to the configuration information | S41 |
| --- | --- |

| determining, according to the parameter information, an HARQ process ID corresponding to a PUSCH in the specific duration | S42 |

FIG. 4

| determining an index of a TO in a specific duration | S51 |
| --- | --- |

| determining an HARQ process ID corresponding to a PUSCH in the specific duration according to the index of the TO and a calculation formula including the index of the TO | S52 |

FIG. 5

| TO index=? | TO index=? | TO index=0 | TO index=1 |

CG period

FIG. 6

| TO index=? | first TO<br>TO index=0 | TO index=1 | TO index=2 |

CG period

FIG. 7

| determining a group index of a TO in a specific duration | S81 |

↓

| determining an HARQ process ID corresponding to a PUSCH in the specific duration according to the group index of the TO and a calculation formula including the group index of the TO | S82 |

FIG. 8

| determining the number of TOs in a specific duration | S91 |

↓

| determining an HARQ process ID corresponding to a PUSCH in the specific duration according to the number of TOs and a calculation formula including the number of TOs | S92 |

FIG. 9

| determining a first offset corresponding to a TO in a specific duration | S101 |

↓

| determining an HARQ process ID corresponding to a PUSCH in the specific duration according to the first offset corresponding to the TO and a calculation formula including the first offset corresponding to the TO | S102 |

FIG. 10

```
┌─────────────────────────────────────────────────────────────┐
│   determining a second offset related to an HARQ process ID   │ ╮ S111
│   corresponding to a first PUSCH in a specific duration       │ ╯
└─────────────────────────────────────────────────────────────┘
                            ↓
┌─────────────────────────────────────────────────────────────┐
│   determining the HARQ process ID corresponding to the first PUSCH │
│   according to the second offset related to the HARQ process ID    │
│   corresponding to the first PUSCH and a calculation formula for the│ ╮ S112
│   second offset related to the HARQ process ID corresponding to the first│ ╯
│   PUSCH                                                        │
└─────────────────────────────────────────────────────────────┘
                            ↓
┌─────────────────────────────────────────────────────────────┐
│   determining that the HARQ process ID corresponding to an $s^{th}$ PUSCH │
│   in the specific duration is the HARQ process ID corresponding to the    │
│   first PUSCH + $(s-1) \times$ a specific value, where $1 \le s \le S$, $s$ is an integer,│ ╮ S112
│   $S$ is the number of TOs in the specific duration, and the specific value is│ ╯
│   an integer                                                  │
└─────────────────────────────────────────────────────────────┘
```

FIG. 11

TO 0    TO 1    TO 2    TO 3

HARQ process ID_0=0                          CG period

FIG. 12

TO 0    TO 1    TO 2    TO 3

HARQ process ID_0=0                          CG period

FIG. 13

| determining a reference HARQ process ID in a specific duration | S141 |

| if the reference HARQ process ID is $M$, then determining, according to the reference HARQ process ID, that the HARQ process ID corresponding to an $n^{th}$ PUSCH in the specific duration is $M - (n - 1)$, where $1 \leq n \leq N$, $N$ is the number of TOs in the specific duration, the reference HARQ process ID is a maximum HARQ process ID applied to the PUSCH in the specific duration, and $M \geq N$; or if the reference HARQ process ID is $M$, then determining, according to the reference HARQ process ID, the HARQ process ID corresponding to an $n^{th}$ PUSCH in the specific duration to be $M + n - 1$, where $1 \leq n \leq N$, $N$ is the number of TOs in the specific duration, the reference HARQ process ID is a minimum HARQ process ID applied to the PUSCH in the specific duration, and $M$ is an integer | S142 |

FIG. 14

| sending configuration information to a terminal, where the configuration information is used by the terminal to determine parameter information in a specific duration | S151 |

FIG. 15

1

communication device

11

transceiver module

12

processing module

FIG. 16

FIG. 17

FIG. 18

## INTERNATIONAL SEARCH REPORT

| International application No. |
|---|
| **PCT/CN2023/087128** |

**A.    CLASSIFICATION OF SUBJECT MATTER**

H04L1/1812(2023.01)i

According to International Patent Classification (IPC) or to both national classification and IPC

**B.    FIELDS SEARCHED**

Minimum documentation searched (classification system followed by classification symbols)

IPC: H04W，H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 混合自动重传请求, 进程, 标识, 传输时机, 索引, 偏移, PUSCH, HARQ, process, ID, TO, transmission occasion, index, offset, CG

**C.    DOCUMENTS CONSIDERED TO BE RELEVANT**

| Category* | Citation of document, with indication, where appropriate, of the relevant passages | Relevant to claim No. |
|---|---|---|
| X | WO 2023011272 A1 (DATANG MOBILE COMMUNICATIONS EQUIPMENT CO., LTD.) 09 February 2023 (2023-02-09) claims 1-35, and description, pages 8-10 | 1-18 |
| A | WO 2022031100 A1 (LG ELECTRONICS INC.) 10 February 2022 (2022-02-10) entire document | 1-18 |
| A | WO 2022031102 A1 (LG ELECTRONICS INC.) 10 February 2022 (2022-02-10) entire document | 1-18 |
| A | WO 2023014200 A1 (LG ELECTRONICS INC.) 09 February 2023 (2023-02-09) entire document | 1-18 |
| A | ERICSSON. "Supporting CG retransmission timer" *3GPP TSG-RAN WG2 #106 Tdoc, R2-1907602*, No. tsgr2_106, 17 May 2019 (2019-05-17), entire document | 1-18 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **24 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/087128**

| Patent document cited in search report | | | Publication date (day/month/year) | Patent family member(s) | | | Publication date (day/month/year) |
|---|---|---|---|---|---|---|---|
| WO | 2023011272 | A1 | 09 February 2023 | None | | | |
| WO | 2022031100 | A1 | 10 February 2022 | US | 2023300829 | A1 | 21 September 2023 |
| | | | | KR | 20230048303 | A | 11 April 2023 |
| WO | 2022031102 | A1 | 10 February 2022 | US | 2023309090 | A1 | 28 September 2023 |
| | | | | KR | 20230044220 | A | 03 April 2023 |
| WO | 2023014200 | A1 | 09 February 2023 | None | | | |

Form PCT/ISA/210 (patent family annex) (July 2022)